# EUROPEAN PATENT APPLICATION

(11) **EP 3 178 636 A1**
(43) Date of publication of application: **14.06.2017**
(21) Application number: 15829788.7
(22) Date of filing: 07.04.2015
(51) Int. Cl.: B29C 67/00

(54) **SHAPE FORMING APPARATUS AND CONTROL METHOD FOR SHAPE FORMING APPARATUS**

(30) Priority: 07.08.2014 KR 20140101678
(71) Applicant: Samsung Electronics Co., Ltd., Suwon-si, Gyeonggi-do 443-742 (KR)
(72) Inventor: BEAK, Oh Hyun, Seoul 137-882 (KR); KUK, Keon, Yongin-si Gyeonggi-do 448-914 (KR); HAN, Eun Bong, Suwon-si Gyeonggi-do 443-798 (KR)
(74) Representative: HGF Limited
(86) International application number: PCT/KR2015/003494
(87) International publication number: WO 2016/021801

(57) **Abstract**

The present invention relates to a shape forming apparatus and a control method for the shape forming apparatus, wherein the shape forming apparatus may comprise a plurality of spray units which evenly spray forming materials having different colors from one another; and a shape forming unit in which a shape is formed from the evenly-sprayed forming materials having different colors from one another.

## Description

### [Technical Field]

The present invention relates to a shape forming apparatus and a method of controlling the shape forming apparatus.

### [Background Art]

A shape forming apparatus means an apparatus capable of forming a shape in a certain shape using various forming materials that are curable under certain conditions such as heat-meltable wax, a heat-curable resin, a light-curable resin, a metal or the like. The shape forming apparatus may include a 3-dimensional printer.

The shape forming apparatus may manufacture a shape using various methods. For example, the shape forming apparatus may form a shape by cutting a raw material using a cutting machine or by spraying input wax or a liquid resin to stack in a certain shape. Also, the shape forming apparatus may melt a material by emitting laser beams toward the material and then form and cure a certain form to form a shape or may form a shape by emitting adhesives toward a material.

Since the shape forming apparatus may input only three-dimensional data with respect to a shape to obtain the shape corresponding thereto without manufacturing an additional mold, various types of shapes may be simply manufactured and designs for shapes may be quickly modified. Also, according to the shape forming apparatus, since the same product may be quickly generated in a plurality of areas far from each other by transmitting three-dimensional data with respect to a shape, it is possible to instantaneously respond to a demand for products.

### [Disclosure of Invention]

### [Technical Problem]

It is an aspect to provide a shape forming apparatus capable of maintain a level of using each of spray nozzles to be almost equivalent or similar and a method of controlling the shape forming apparatus.

It is another aspect to provide a shape forming apparatus capable of reconsidering reliability of a shape forming operation, reducing a time used for maintenance, and reducing an amount of a forming material lost in maintaining each spray nozzle and a method of controlling the same.

It is still another aspect to provide a shape forming apparatus capable of increasing a forming speed as well as reducing the number of necessary spray nozzles and a method of controlling the shape forming apparatus.

### [Technical Solution]

To solve the problems described above, a shape forming apparatus and a method of controlling the shape forming apparatus are provided.

The shape forming apparatus includes a plurality of spraying portions configured to equivalently spray forming materials in different colors and a shape forming portion at which a shape is formed by the forming materials in different colors that are equivalently sprayed.

The plurality of spraying portions may spray the forming materials in different colors through a plurality of circulations and may equivalently spray the forming materials in different colors for each circulation.

The plurality of spraying portions may spray the forming materials in different colors according to a predefined spraying pattern.

The plurality of spraying portions may spray the forming materials in different colors according to a first pattern during at least one first circulation among a plurality of circulations and may spray the forming materials in different colors according to a second pattern different from the first pattern during another second circulation.

The plurality of spraying portions may sequentially spray the forming materials in different colors according to an arrangement order of the plurality of spraying portions.

The shape forming apparatus may further include a support material spraying portion configured to form a support separable and detachable from a shape by spraying a support material to a support forming position.

The support may be removable using heat or a solution.

The plurality of spraying portions and the support material spraying portion may be controlled to spray the forming materials and the support material to form a shape corresponding to obtained shape data.

The support material spraying portion may spray a support material having a droplet larger than droplets of the forming materials sprayed by the plurality of spraying portions.

At least one of the plurality of spraying portions and the support material spraying portion may spray the forming materials and the support material to a support forming section to form the support.

At least one of the plurality of spraying portions may spray the forming materials to at least one place of the support forming section and the support material spraying portion may spray the support material to another place different from the at least one place to which the forming materials are sprayed to form the support.

The forming materials in different colors may include pigments in different colors.

The pigments in different colors may include cyan, magenta, yellow, and black.

The pigments in different colors may include cyan, magenta, yellow, and white.

The plurality of spraying portions may include a white spraying portion configured to spray white, at least one of the plurality of spraying portions may spray at least one of cyan, magenta, yellow, and white to a first row of the shape, and the white spraying portion may spray white to a second row in contact with the first row.

The first row may include a surface of the shape.

When white is sprayed to a first row of a shape, at least one of the plurality of spraying portions may spray at least one of cyan, magenta, and yellow to one place of a second row corresponding to one place of the first row to which the white is sprayed.

The shape forming portion may include a base portion on which the sprayed forming materials in different colors are stacked.

The base portion may be movable in a direction in which the plurality of spraying portions are arranged or a direction opposite to the direction in which the spraying portions are arranged.

The shape forming apparatus may further include an exposure portion configured to emit ultraviolet (UV) rays toward the forming materials stacked on the base portion to cure the stacked forming materials.

The shape forming apparatus may further include a roller configured to level the stacked forming materials.

At least one of the plurality of spraying portions may spray the forming materials using a piezoelectric inkjet method of spraying the forming materials according to deformation of a piezoelectric body.

At least one of the plurality of spraying portions may spray the forming materials using a thermal inkjet method of spraying the forming materials according to instantaneous heating of a heater.

At least one of the plurality of spraying portions may be movable in a direction that intersects with a direction of spraying the forming materials or a direction parallel to the forming materials.

The method of controlling the shape forming apparatus may relate to a method of controlling a shape forming apparatus including a plurality of spraying portions configured to spray forming materials in different colors.

The method includes generating a control signal related to spraying of the forming materials corresponding to shape data; and spraying equivalent amounts of the forming materials in different colors according to the control signal.

The spraying may include spraying the forming materials in different colors through a plurality of circulations and may equivalently spray the forming materials in different colors for each circulation.

The spraying may include spraying the forming materials in different colors according to a predefined spraying pattern.

The spraying may include spraying the forming materials in different colors according to a first pattern during at least one first circulation among the plurality of circulations and spraying the forming materials in different colors according to a second pattern different from the first pattern during another second circulation.

The method may further include forming, by a support material spraying portion, a support separable and detachable from a shape by spraying a support material to a support forming position.

The forming of the support may include spraying a support material having a droplet larger than droplets of the forming materials sprayed by the plurality of spraying portions.

The forming of the support may include forming, by at least one of the plurality of spraying portions and the support material spraying portion, the support by spraying the forming materials and the support material to a support forming section.

The forming of the support may include forming the support by spraying, by at least one of the plurality of spraying portions, the forming materials to at least one place of the support forming section and spraying, by the support material spraying portion, the support material to another place different from the at least one place to which the forming materials are sprayed.

The method may include removing the support.

The forming materials in different colors may include pigments in different colors while the pigments in different colors include cyan, magenta, and yellow and may further include at least one of black and white.

The spraying may include spraying at least one of cyan, magenta, yellow, and white to a first row of the shape and spraying, by a white spraying portion, to a second row in contact with the first row.

The first row may include a surface of the shape.

When white is sprayed to the first row of a shape, the spraying may include spraying at least one of cyan, magenta, and yellow to one place of a second row corresponding to one place of the first row to which the white is sprayed.

The method may further include leveling stacked forming materials and curing the stacked forming materials by emitting UV rays toward the stacked forming materials.

The method may further include transferring the plurality of spraying portions.

At least one of the plurality of spraying portions may spray the forming materials using a piezoelectric inkjet method of spraying the forming materials according to deformation of a piezoelectric body.

At least one of the plurality of spraying portions may spray the forming materials using a thermal inkjet method of spraying the forming materials according to instantaneous heating of a heater.

### [Advantageous Effects]

According to the shape forming apparatus and the method of controlling the shape forming apparatus as described above, a degree of using each of spray nozzles may be maintained almost equivalently or similarly.

Also, according to the shape forming apparatus and the method of controlling the shape forming apparatus as described above, since each of spray nozzles is almost equivalently or similarly used, a blockage of a particular nozzle that may occur due to frequent using of the particular nozzle may be prevented and a time consumed for cleaning the particular nozzle may be reduced.

Also, according to the shape forming apparatus and the method of controlling the shape forming apparatus as described above, a time used for maintaining each of spray nozzles may be reduced and additionally an amount of a forming material lost for maintaining each of spray nozzles may be reduced.

According to the shape forming apparatus and the method of controlling the shape forming apparatus as described above, since a forming speed is increased, an effect of quickly forming a shape may be obtained.

According to the shape forming apparatus and the method of controlling the shape forming apparatus as described above, since it is unnecessary to separately include nozzles for spraying a coloring material and nozzles for spraying a forming material, effects of reducing manufacturing costs of the apparatus and reducing complexity of the apparatus may be obtained.

### [Brief Description of Drawings]

FIG. 1 is a view illustrating one embodiment of a shape forming apparatus.
FIG. 2 is a perspective view illustrating an external shape of one embodiment of the shape forming apparatus.
FIG. 3 is a configuration diagram illustrating one embodiment of the shape forming apparatus.
FIG. 4 is a view illustrating an internal structure of one embodiment of the shape forming apparatus.
FIG. 5 is a configuration diagram illustrating one embodiment of a forming material spraying module.
FIG. 6a is a view illustrating one embodiment of the forming material spraying module.
FIG. 6b is a bottom view illustrating one embodiment of the forming material spraying module.
FIG. 7 is a cross-sectional view illustrating a first embodiment of a nozzle portion.
FIGS. 8 to 10 are views illustrating a principle of spraying a forming material by the first embodiment of the nozzle portion.
FIG. 11 is a cross-sectional view illustrating a second embodiment of the nozzle portion.
FIGS. 12 to 14 are views illustrating a principle of spraying a forming material by the second embodiment of the nozzle portion.
FIGS. 15a to 15c are views illustrating one embodiment of a process in which a shape is fixed by emitting ultraviolet (UV) rays.
FIG. 16 is a view illustrating one embodiment of a shape forming process of a shape forming apparatus.
FIG. 17 is a view illustrating a first embodiment of spraying a forming material of a shape forming apparatus.
FIG. 18 is a view illustrating a first pattern of spraying forming materials of a shape forming apparatus.
FIGS. 19 to 22 are views illustrating an embodiment of spraying a forming material by a shape forming apparatus in the first pattern.
FIG. 23 is a view illustrating a second pattern of spraying forming materials of a shape forming apparatus.
FIG. 24 is a view illustrating a shape obtained as a result of spraying forming materials in the second pattern.
FIG. 25 is a view illustrating a second embodiment of spraying a forming material of a shape forming apparatus.
FIGS. 26 and 27 are views illustrating a shape obtained according to the second embodiment.
FIGS. 28 and 29 are views illustrating a third embodiment of spraying a forming material of a shape forming apparatus.
FIG. 29 is a view illustrating a shape obtained according to the third embodiment.
FIGS. 30 and 31 are views illustrating a fourth embodiment of spraying a forming material of a shape forming apparatus.
FIG. 32 is a view illustrating a shape obtained according to the fourth embodiment.
FIGS. 33 and 34 are views illustrating a fifth embodiment of spraying a forming material of a shape forming apparatus.
FIGS. 35 and 36 are views illustrating a process of removing a support material of the shape obtained according to the fourth embodiment.
FIG. 37 is a flowchart illustrating one embodiment of a process before a forming material spraying module moves in a method of controlling a shape forming apparatus.
FIG. 38 is a flowchart illustrating a first embodiment of the method of controlling the shape forming apparatus.
FIG. 39 is a flowchart illustrating a second embodiment of the method of controlling the shape forming apparatus.
FIGS. 40 to 42 are flowcharts illustrating a third embodiment of the method of controlling the shape forming apparatus.
FIG. 43 is a flowchart illustrating a fourth embodiment of the method of controlling the shape forming apparatus.

### [Mode for Invention]

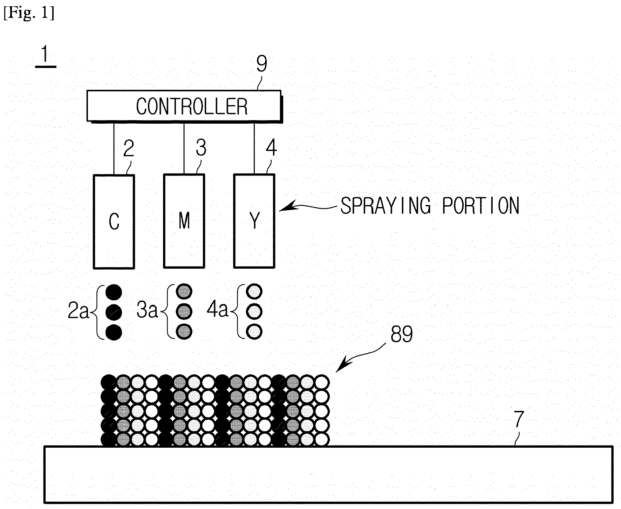

Hereinafter, one embodiment of a shape forming apparatus will be described with reference to FIG. 1. FIG. 1 is a view illustrating one embodiment of the shape forming apparatus. As shown in FIG. 1, a shape forming apparatus 1 may include a plurality of spraying portions 2 to 4 that spray forming materials 2a to 4a and a shape forming portion 7 at which the sprayed forming materials 2a to 4a are stacked to form a shape 89.

The plurality of spraying portions 2 to 4 may spray the forming materials 2a to 4a in certain colors toward the shape forming portion 7. Each of the spraying portions 2 to 4 may equivalently spray the forming materials 2a to 4a.

Here, the meaning of equivalent spraying amounts may include a meaning in which spraying amounts of the forming materials 2a to 4a sprayed from the respective spraying portions 2 to 4 may be equivalent to one another. Also, a meaning which the spraying amounts are equivalent may include not only a meaning in which the spraying amounts of the forming materials 2a to 4a sprayed by the respective spraying portions 2 to 4 for a certain period are completely identical but also a meaning in which a difference is present between the spraying amounts to a certain degree within an allowable range. In other words, the plurality of spraying portions 2 to 4 may spray the forming materials 2a to 4a in completely equivalent amounts and may spray the forming materials 2a to 4a in almost equivalent or similar amounts. For example, a first spraying portion 2 may spray the forming material 2a 100 times, a second spraying portion 3 may spray the forming material 3a 110 times, and a third spraying portion 4 may spray the forming material 4a 99 times. As described above, spraying of the forming materials 2a to 4a by the first spraying portion 2 to the third spraying portion 4 may be interpreted as equivalently spraying the forming materials 2a to 4a. Here, the allowable range may be arbitrarily determined according to a selection of a designer or a user.

According to one embodiment, the spraying portions 2 to 4 may equivalently spray the forming materials 2a to 4a within a predefined range. Here, the range may be analyzed as including at least one of a spatial range and a temporal range. In other words, when being positioned in a predefined first section, the respective spraying portions 2 to 4 may equivalently spray the forming materials 2a to 4a. Also, for a certain predefined time, for example, in a first circulation, the forming materials 2a to 4a may be equivalently sprayed. In this case, an amount of the forming material 2a sprayed by the first spraying portion 2 in the first section or during the first circulation may be equivalent or almost equivalent to an amount of the forming material 3a sprayed by the second spraying portion 3 in the same section or during the same circulation. Otherwise, there may be present a slight difference within a certain range. For example, the first forming material 2a, the second forming material 2b, and the third forming material 2c may be sprayed the same number of times during one circulation.

When the respective spraying portions 2 to 4 equivalently spray the forming materials 2a to 4a, only several particular spraying portions do not intensively spray forming materials. Accordingly, a blockage phenomenon of a particular spraying portion that may occur due to intensive spraying of forming material by only the particular spraying portion or consumption of the only particular spraying portion in a short time may be prevented. Also, since the plurality of spraying portions 2 to 4 equivalently spray the forming materials 2a to 4a, a shape may be formed at a much higher speed than when forming material is sprayed by only the particular spraying portion.

The number of the spraying portions 2 to 4 that spray the forming materials 2a to 4a may be variously selected according to a selection of a designer of the shape forming apparatus 1 or as necessary. For example, as shown in FIG. 1, the shape forming apparatus 1 may employ three spraying portions 2 to 4, may employ four spraying portions 2 to 4, or may employ five spraying portions 2 to 4. As necessary, the shape forming apparatus 1 may employ less or more spraying portions 2 to 4.

Colors of the forming materials 2a to 4a sprayed by the respective spraying portions 2 to 4 may be arbitrarily determined according to a selection of a designer. The colors of the forming materials 2a to 4a may include red R, green G, and blue B. The colors of the forming materials 2a to 4a may include cyan C, magenta M, and yellow Y. Also, the colors of the forming materials 2a to 4a may include black K or white W. Each of the spraying portions 2 to 4 may be set or manufactured to spray the forming materials 2a to 4a in different colors. For example, the shape forming apparatus 1 may include four spraying portions 2 to 4 and the respective spraying portions 2 to 4 may differently spray the forming materials 2a to 4a of cyan, magenta, yellow, and white.

According to one embodiment, each of the spraying portions 2 to 4 may be set or manufactured to spray the only assigned one of the forming materials 2a to 4a. For example, the first spraying portion 2 may spray only the forming material 2a of cyan, the second spraying portion 3 may spray only the forming material 3a of magenta, and the third spraying portion 4 may spray only the forming material 4a of yellow to form the shape 89.

According to another embodiment, one of the spraying portions 2 to 4 may spray the forming materials 2a to 4a in several colors. For example, the first spraying portion 2 may selectively spray the forming material 2a of cyan, the forming material 3a of magenta, and the forming material 4a of yellow. In detail, when the first spraying portion 2 is connected to a forming material storage container filled with each of the forming materials 2a to 4a using a pipe such as a tube or the like, under control of a controller 9, the forming material storage containers connected to the first spraying portion 2 may be switched with each other to supply different forming materials 2a to 4a to the first spraying portion 2. The first spraying portion 2 may receive the different forming materials 2a to 4a according to switching of the forming material storage containers and may spray the different forming materials 2a to 4a toward the shape forming portion 7 to form the shape 89.

The forming materials 2a to 4a may be a liquid material having liquidity. For example, the forming materials 2a to 4a may include an epoxy resin, an acrylate resin, and a photopolymer. Also, the forming materials 2a to 4a may include a liquid metal.

According to one embodiment, the forming materials 2a to 4a sprayed by the spraying portions 2 to 4 may include a photocurable ink cured by receiving light. The photocurable ink may include a base resin, a reactive diluent, a photopolymerization initiator, a coloring material, a polymerization inhibitor, and other auxiliary components. The base resin may include an oligomer. The reactive diluent may include a monomer. The base resin and the reactive diluent may be combined by emitting light such as ultraviolet (UV) rays to allow the photocurable ink to be cured by the light. As a result thereof, the shape 89 formed by stacking the forming materials 2a to 4a may be fixed. The photopolymerization initiator may be decomposed into free radicals and may induce a polymerization between the base resin and the reactive diluent. The coloring material may include a pigment or a dye. The pigment may be an organic pigment, an inorganic pigment, or a lake pigment. Depending on the coloring material, colors of the forming materials 2a to 4a may be determined. For example, a cyan forming material may include a cyan pigment, a magenta forming material may include a magenta pigment, a yellow forming material may include a yellow pigment, and a white forming material may include a white pigment. The polymerization inhibitor may perform a function of suppressing a dark reaction of an ink.

As necessary, the photocurable ink may include a co-solvent, an anti-kogation agent, or an anti-bleeding agent. The co-solvent may assist dissolution and dispersion of a pigment in an ink sprayed by the spraying portions 2 to 4. The co-solvent may assist evaporation in a head when using a thermal ink jet method. The anti-kogation agent may prevent a decrease in efficiency of a heater 41 caused by ink impurities attached thereto when using the thermal ink jet method. The anti-bleeding agent may prevent the occurrence of color mix at a boundary between the forming materials 2a to 4a. The co-solvent, the anti-kogation agent, or the anti-bleeding agent may use materials generally employed for shape forming apparatuses.

According to one embodiment, any one of the spraying portions 2 to 4 may spray a support material for forming a support detachable from a shape. The support material may be a material that is meltable or evaporable by heat or dissoluble by a solvent. For example, the support material may include paraffin meltable by heat or glycerin dissoluble by a solvent such as water.

The spraying portions 2 to 4 may move as necessary. A movement direction of the spraying portions 2 to 4 may be a spraying direction of the forming materials 2a to 4a, in other words, a direction in which the shape forming portion 7 is positioned or may be a direction opposite to the spraying direction of the forming materials 2a to 4a. Also, the movement direction of the spraying portions 2 to 4 may be a direction that forms a certain angle with the spraying direction of the forming materials 2a to 4a. For example, the movement direction of the spraying portions 2 to 4 may be a direction that intersects with the spraying direction of the forming materials 2a to 4a.

The forming materials 2a to 4a sprayed by the spraying portions 2 to 4 may be stacked at the shape forming portion 7 to form the shape 89. The shape forming portion 7 may include a base portion in a flat panel shape to which the sprayed forming materials 2a to 4a are easily stacked and a space provided above the base portion. The base portion of the shape forming portion 7 may move in a direction in which the spraying portions 2 to 4 are positioned or a direction opposite to the direction in which the spraying portions 2 to 4 are positioned as necessary. Also, the base portion may move in a direction at a certain angle with the spraying direction of the forming materials 2a to 4a. For example, the base portion may move in the direction that intersects with the spraying direction of the forming materials 2a to 4a.

The shape forming apparatus 1 may further include the controller 9 for controlling operations of the shape forming apparatus 1. The controller 9 may control operations of at least one of the spraying portions 2 to 4 and the shape forming portion 7 to form the shape 89. For example, the controller 9 may control spraying times of the spraying portions 2 to 4, spraying amounts or spraying patterns of the forming materials 2a to 4a, movements of the spraying portions 2 to 4, a movement of the shape forming portion 7 and the like. According to one embodiment, the controller 9 may control the plurality of spraying portions 2 to 4 to equivalently spray the forming materials 2a to 4a in different colors to form the shape 89.

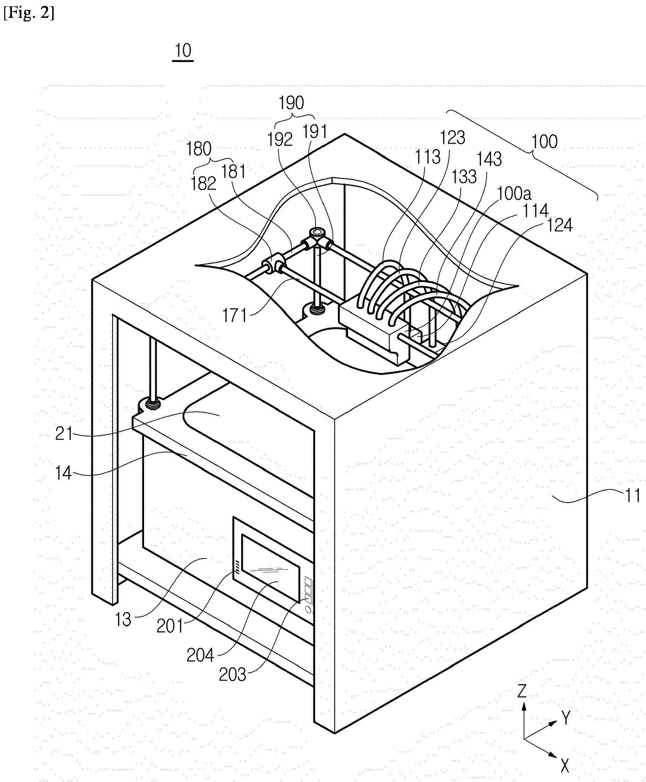

Hereinafter, one embodiment of the shape forming apparatus will be described with reference to FIGS. 2 to 16.

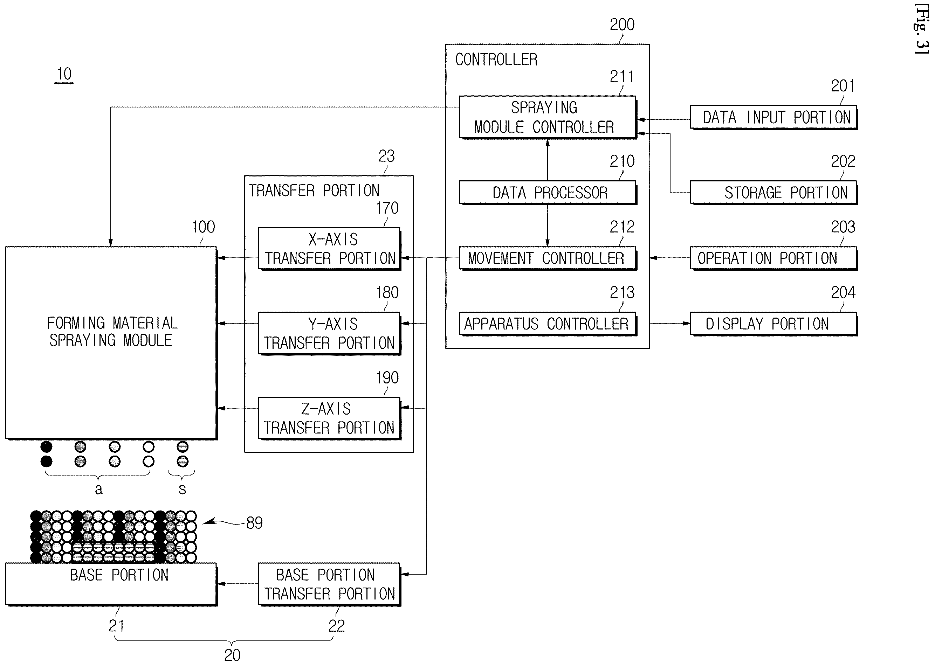

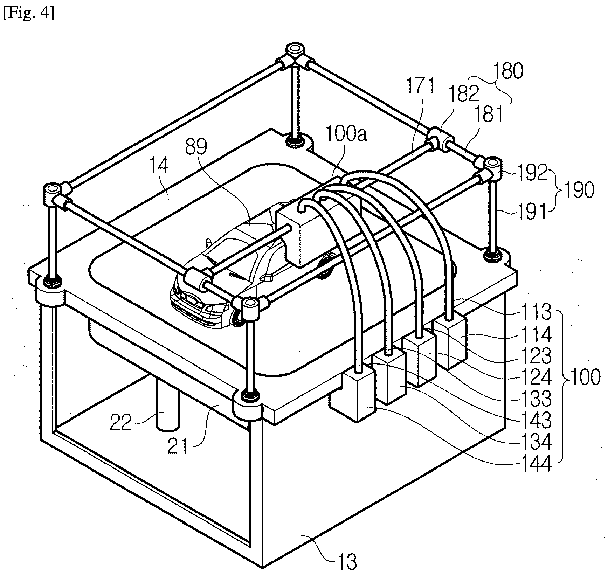

FIG. 2 is a perspective view illustrating an external shape of one embodiment of the shape forming apparatus, FIG. 3 is a configuration diagram illustrating one embodiment of the shape forming apparatus, and FIG. 4 is a perspective view illustrating one embodiment of an internal structure of the shape forming apparatus.

Referring to FIGS. 2 to 4, a shape forming apparatus 10 may include an external housing 11, an internal housing 13 installed inside the external housing 11, and a forming material spraying module 100 provided at a top end of the internal housing 13. The shape forming apparatus 10 may include a base portion 21 at which the shape 89 is formed, various types of transfer portions 22, 170, 180, and 190, a controller 200, a data input portion 201, a storage portion 202, an operation portion 203, and a display portion 204. Some of components described above may be omitted as necessary. Also, the shape forming apparatus 10 may further include other components not disclosed herein.

The external housing 11, as shown in FIG. 2, may include various types of components related to the shape forming apparatus 10 in addition to the internal housing 13 that are built therein and may protect the various types of components built therein. The external housing 11 may provide a function of shielding a shape forming space from the outside to allow the shape forming apparatus 10 to stably form the shape 89 without external interference. An opening 11 a may be provided on at least one surface of the external housing 11, and a user may take out the shape 89 that is finished through the opening 11 a. The opening 11 a may include a door openable as necessary. Also, the external housing 11, as necessary, may include at least one of the data input portion 201 for receiving data, the operation portion 203 operated by a user to receive a command from the user, and the display portion 204 configured to display various types of information to the user.

The internal housing 13 may include various types of components related to controlling of the shape forming apparatus 10 and built therein. For example, a semiconductor chip and a substrate on which the semiconductor chip is installed to perform the function of the controller 200 may be installed inside the internal housing 13. The internal housing 13 may include at least one of the data input portion 201 for receiving data, the operation portion 203 operated by a user to receive a command from the user, and the display portion 204 configured to display various types of information to the user.

The internal housing 13 may include the base portion 21. The base portion 21 may have the shape of a flat panel on which a shape is formed. A top surface of the base portion 21 may be exposed to an upper surface 14 of the internal housing 13 in such a way that a forming material a or a support material s sprayed by the forming material spraying module 100 may be stacked thereon. The base portion 21 may be moved by a base portion transfer portion 22. The movement of the base portion 21 may be controlled depending on a shape and the like of the shape 89 that is to be formed. According to one embodiment, the base portion 21 may be moved in a direction of spraying the forming material a or a direction opposite thereto. For example, the base portion 21 may move in a direction opposite to a direction in which the forming material spraying module 100 is disposed not to allow the shape 89 formed of the forming material a to come into contact with the forming material spraying module 100 as the forming material a is stacked. Also, as another example, the base portion 21 may move toward the forming material spraying module 100 to allow the stacked forming material a to be leveled by a leveling roller 101. According to another example, the base portion 21 may be moved in a direction that intersects with the direction of spraying a forming material. In this case, the base portion 21 may move in at least one of an x-axis direction and a y-axis direction to allow the forming material a sprayed according to a shape that is to be formed to arrive at and be stacked on a proper position on the top surface of the base portion 21. As necessary, the base portion 21 may move in the direction of spraying the forming material a or the direction opposite thereto while moving in the direction that intersects with the direction of spraying the forming material. The base portion transfer portion 22 may be provided inside the internal housing 13 and may transfer the base portion 21 in a certain direction according to driving of a motor or an actuator.

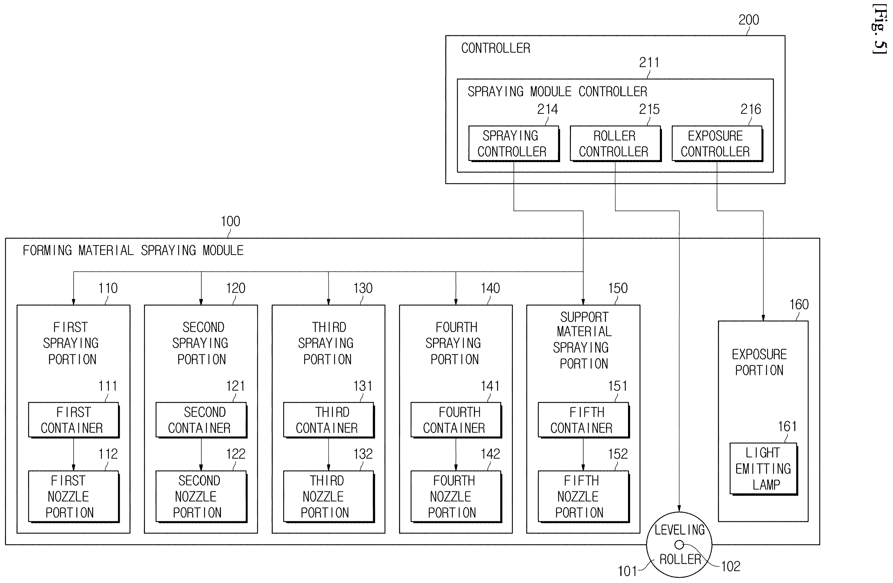

The forming material spraying module 100 may spray the forming materials a in different colors toward the base portion 21 to form the shape 89. As necessary, the forming material spraying module 100 may further spray the support material s to form various forms of the shape 89. The forming material spraying module 100 may include a main body 100a configured to spray the forming materials a in different colors, a plurality of forming material cartridges 114, 124, 134, and 144 configured to supply the forming materials a in different colors, and a plurality of connection tubes 113, 123, 133, and 143 configured to connect the main body 100a with the cartridges 114, 124, 134, and 144. The main body 100a may spray the forming materials a in different colors supplied from the cartridges 114, 124, 134, and 144. Here, the forming material a may include a photocurable ink cured by receiving light. A substrate and the like for controlling nozzles 112, 122, 132, 142, and 152 (refer to FIG. 5) and the forming material spraying module 100 may be provided at the main body 100a. The cartridges 114, 124, 134, and 144 may store the forming materials a in different colors. The cartridges 114, 124, 134, and 144 may be installed in the forming material spraying module 100 to be replaceable. The cartridges 114, 124, 134, and 144 may store the forming materials a in colors different from one another, respectively. For example, a first cartridge 114 may store a cyan forming material, a second cartridge 124 may store a magenta forming material, a third cartridge 134 may store a yellow forming material, and a fourth cartridge 144 may store a white forming material. The forming materials stored in the cartridges 114, 124, 134, and 144 may be supplied to the main body 100a through the connection tubes 113, 123, 133, and 143 connected to the cartridges 114, 124, 134, and 144, respectively. The connection tubes 113, 123, 133, and 143 may be formed of a material such as rubber and the like. Channels through which the forming materials a are passable may be provided inside the connection tubes 113, 123, 133, and 143. When the plurality of cartridges 114, 124, 134, and 144 are directly attachable to and combinable with the main body 100a, the plurality of connection tubes 113, 123, 133, and 143 may be omitted.

The shape forming apparatus 10 may include a transfer portion 23 for transferring the forming material spraying module 100. The forming material spraying module 100 may be moved in at least one of an x-axis direction, a y-axis direction, and a z-axis direction by the transfer portion 23. The forming material spraying module 100 may spray the forming materials a in different colors or the support material s. The transfer portion 23 may include an x-axis transfer portion 170, a y-axis transfer portion 180, and a z-axis transfer portion 190.

The x-axis transfer portion 170 and the y-axis transfer portion 180 may move the forming material spraying module 100 in a horizontal direction. According to one embodiment, the x-axis transfer portion 170 may include an x-axis bar 171 along which the forming material spraying module 100 moves. The x-axis bar 171 may include a rail. The forming material spraying module 100 may move along the x-axis bar 171 due to rotating of a built-in wheel or toothed wheel. Accordingly, the forming material spraying module 100 may move in a positive x-axis direction or a negative x-axis direction along the x-axis. For rotating of the built-in wheel or toothed wheel, the forming material spraying module 100 may include one or more motors or actuators built therein. Here, the motor may be an alternating current (AC) motor or may be a brushless direct current (BLDC) motor. The y-axis transfer portion 180, according to one embodiment, may include a y-axis bar 181 and a movable body 182 that moves along the y-axis bar 181. The y-axis bar 181 may include a rail. The movable body 182 may move along the y-axis bar 181 due to rotating of the built-in wheel or toothed wheel to allow the forming material spraying module 100 to move along the y-axis. The movable body 182 may include a motor or an actuator.

The z-axis transfer portion 190 may move the forming material spraying module 100 in a vertical direction. According to one embodiment, the z-axis transfer portion 190 may include a z-axis bar 191 and a movable body 192 that moves along the z-axis bar 191. The movable body 192 moves along the z-axis bar 191 such as a rail due to a built-in wheel or toothed wheel to allow the forming material spraying module 100 to move along the z-axis. The movable body 192 may include a motor built therein for rotating of the wheel. According to embodiments, the movable body 192 may include an actuator built therein.

As described above, the embodiment in which the x-axis transfer portion 170, the y-axis transfer portion 180, and the z-axis transfer portion 190 transfer the forming material spraying module 100 using the certain bars 171, 181, and 191 has been described. However, the x-axis transfer portion 170, the y-axis transfer portion 180, and the z-axis transfer portion 190 are not limited thereto. For example, the x-axis transfer portion 170, the y-axis transfer portion 180, and the z-axis transfer portion 190 may transfer the forming material spraying module 100 using fluid pressure. In addition, one of ordinary skill in the art may employ various methods for transferring a shape for the x-axis transfer portion 170, the y-axis transfer portion 180, and the z-axis transfer portion 190. According to embodiments, the shape forming apparatus 10 may include all or some of the x-axis transfer portion 170, the y-axis transfer portion 180, and the z-axis transfer portion 190. For example, the shape forming apparatus 10 may include only the x-axis transfer portion 170 and the y-axis transfer portion 180.

The shape forming apparatus 10 may further include the controller 200 configured to control operations of the shape forming apparatus 10. The controller 200 may be embodied by one or more semiconductor chips operated by a certain program and a printed circuit board (PCB) on which the semiconductor chip is installable and the like. The controller 200 may be a central processing unit (CPU), a micro-controller unit (MCU) or the like.

As shown in FIG. 3, the controller 200 may include a data processor 210, a spraying module controller 211, a movement controller 212, and an apparatus controller 213.

The data processor 210 may analyze shape data with respect to the shape 89 stored in the data input portion 201 or the storage portion 202 and may transfer an analysis result to the spraying module controller 211 or the movement controller 212. For example, the data processor 210 may extract coordinates of several points of the shape 89 such as an external shape or features of the shape 89 based on the shape data and may determine a spraying position or spraying amount of the forming material a according to the extracted coordinates. Also, the data processor 210 may determine a spraying pattern of the forming material a by each of spraying portions 110 to 150.

The spraying module controller 211 may generate a control signal for controlling the forming material spraying module 100 according to a determination result of the data processor 210. The spraying module controller 211 may generate a control signal with respect to each of the spraying portions 110 to 150 according to the spraying pattern determined by the data processor 210 and may transfer the generated control signal to the forming material spraying module 100. According to embodiments, the spraying module controller 211 may determine spraying patterns of the spraying portions 110 to 150. Also, the spraying module controller 211 may generate a control signal for controlling the leveling roller 101 or an exposure portion 160 provided at the forming material spraying module 100. Also, the spraying module controller 211 may generate a control signal for controlling the leveling roller 101 or the exposure portion 160 depending on spraying of the forming material a. As described above, to control the forming material spraying module 100, the spraying module controller 211 may include a spraying controller 214 (refer to FIG. 5), a roller controller 215 (refer to FIG. 5), and an exposure controller 216 (refer to FIG. 5).

The movement controller 212 may determine a movement position of the forming material spraying module 100 according to a determination result of the data processor 210, may generate a control signal with respect to at least one of the x-axis transfer portion 170, the y-axis transfer portion 180, and the z-axis transfer portion 190 of the transfer portion 23 according to the determined movement position, and may transmit the generated control signal to at least one of the x-axis transfer portion 170, the y-axis transfer portion 180, and the z-axis transfer portion 190 of the transfer portion 23. The x-axis transfer portion 170, the y-axis transfer portion 180, and the z-axis transfer portion 190 of the transfer portion 23 may transfer the forming material spraying module 100 according to the transmitted control signal.

The apparatus controller 213 may generate control signals with respect to other components in addition to the forming material spraying module 100 and the transfer portion 23 to control the shape forming apparatus 10. For example, the apparatus controller 213 may generate a control signal with respect to the display portion 204 and may transmit the generated control signal to the display portion 204.

Even though FIG. 3 separately illustrates the data processor 210, the spraying module controller 211, the movement controller 212, and the apparatus controller 213, it does not necessarily mean that the data processor 210, the spraying module controller 211, the movement controller 212, and the apparatus controller 213 are physically divided. The data processor 210, the spraying module controller 211, the movement controller 212, and the apparatus controller 213 may be logically divided. However, according to embodiments, different semiconductor chips perform operations of the data processor 210, the spraying module controller 211, the movement controller 212, and the apparatus controller 213 to physically divide them.

The data input portion 201 may receive shape data with respect to the shape 89 that will be formed by the shape forming apparatus 10. Here, the shape data may include a two-dimensional or three-dimensional view that is digitally shown. The shape data may include information such as an external surface, a boundary line, coordinate values of feature points and the like of the shape 89.

According to one embodiment, the data input portion 201 may include a wired communication module or a wireless communication module capable of receiving data transmitted from a remote place. The wired communication module may include a network interface controller (NIC), a communication cable terminal, a communication cable and the like for controlling communication. The wireless communication module may include a communication chip, an antenna and the like that perform wireless communication according to a certain wireless communication method. Here, the wireless communication method may include a wireless fidelity (Wi-Fi) method or a Bluetooth method.

According to another embodiment, the data input portion 201 may include at least one of a serial port, a parallel port, a small computer system interface (SCSI) external port, a DIN port, an ADB terminal, a PS/2 terminal, a universal serial bus (USB) port, and an IEEE 1394 port. Data with respect to the shape 89 input into the data input portion 201 may be temporarily or nontemporarily stored in the storage portion 202 and then transmitted to the controller 200 or may be directly transmitted to the controller 200.

The storage portion 202 may store data such as a two-dimensional or three-dimensional drawing of the shape 89. Also, the storage portion 202 may store various pieces of information necessary for the controller 200 to control the shape forming apparatus 10. The data stored in the storage portion 202 may be changed or updated by controlling of the controller 200 or by an input of data through the data input portion 201. The storage portion 202 may temporarily or nontemporarily store various pieces of information. The storage portion 202 may be embodied by various types of semiconductor storage devices or magnetic disc storage devices. Additionally, all various devices that are usable for storing data may be examples of the storage portion 202. The storage portion 202 may be embodied by one storage device or may be embodied by a plurality of storage devices. The storage portion 202 may be embodied by one type storage device or may be embodied by several types of storage devices.

The operation portion 203 may receive various instructions or pieces of information from a user. The user may input the data with respect to the shape 89 that will be formed by operating the operation portion 203 instead of the data input portion 201. The operation portion 203 may be embodied by at least one of a keyboard, a keypad, a knob, a trackball, a mouse, a joystick, a touch pad, and a touch screen. When the user operates the operation portion 203, the operation portion 203 may output and transmit an operation signal corresponding to the operation of the user to the controller 200.

The display portion 204 may display various pieces of information related to the shape forming apparatus 10 and the shape 89 that will be formed. For example, the display portion 204 may display an input three-dimensional drawing or may display messages with respect to a method of controlling the shape forming apparatus 10 or various errors that occur while the shape forming apparatus 10 operates. The display portion 204 may display various pieces of information to the user through a graphic user interface (GUI). The GUI may have various designs according to an arbitrary selection of a designer. Also, the display portion 204 may display various still images or moving images for convenience of the user or aesthetics. The display portion 204 may operate according to a control signal of the controller 200.

The display portion 204 may employ at least one of a plasma display panel (PDP), a liquid crystal display (LCD) panel, an organic light emitting display (OLED) panel, a light emitting display (LED) panel, and a touch panel. Additionally, various means capable of displaying texts or images to the user may be employed as the display portion 204.

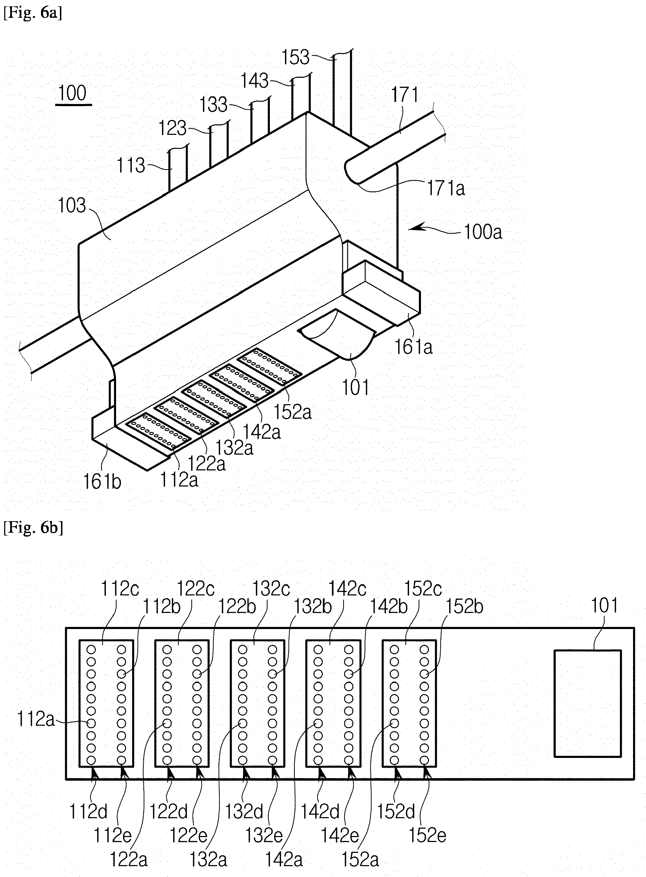

Hereinafter, the forming material spraying module 100 will be described in detail. FIG. 5 is a configuration diagram illustrating one embodiment of the forming material spraying module. FIG. 6a is a view illustrating one embodiment of the forming material spraying module, and FIG. 6b is a bottom view illustrating one embodiment of the forming material spraying module.

As shown in FIGS. 5, 6a, and 6b, the material forming spraying module may include the plurality of spraying portions 110 to 150, the leveling roller 101, and the exposure portion 160 that are provided inside or outside the main body 100a.

The spraying portions 110 to 150 may respectively include containers 111, 121, 131, 141, and 151 that store forming materials that will be sprayed and the nozzle portions 112, 122, 132, 142, and 152 that spray the forming materials.

Each of the containers 111, 121, 131, 141, and 151 may store a forming material corresponding to each of the spraying portions 110, 120, 130, 140, and 150. For example, when a first spraying portion 110 sprays a cyan forming material, a first container 111 may store the cyan forming material. A fifth container 151 of a support material spraying portion 150 may store a support material. The first to fifth containers 111, 121, 131, 141, and 151 may be provided inside the forming material spraying module 100, or as shown in FIGS. 2 to 4, may be provided at the additional cartridges 114, 124, 134, 144, and 154. According to embodiments, some containers may be provided inside the forming material spraying module 100 and other containers may be provided at the additional cartridges.

The nozzle portions 112, 122, 132, 142, 152, as shown in FIGS. 6a and 6b, may respectively include nozzles 112a, 122a, 132a, 142a, and 152a exposed outward from a bottom surface of a housing of the main body 110a. According to embodiments, each of the nozzle portions 112, 122, 132, 142, and 152 may include only one each of the nozzles 112a, 122a, 132a, 142a, and 152a or may include two or more nozzles 112b, 122b, 132b, 142b, and 152b. One or two or more nozzles 112a, 112b, 122a, 122b, 132a, 132b, 142a, 142b, 152a, and 152b may be provided at one or two or more nozzle forming portions 112c, 122c, 132c, 142c, and 152c provided at the bottom of the main body 110a toward the base portion 21. The one or two or more nozzles 112a, 112b, 122a, 122b, 132a, 132b, 142a, 142b, 152a, and 152b provided at the nozzle forming portions 112c, 122c, 132c, 142c, and 152c may be arranged in one row 112d, 122d, 132d, 142d, and 152d, or as shown in FIGS. 6a and 6b, may be arranged in two or more rows 112d, 112e, 122d, 122e, 132d, 132e, 142d, 142e, 152d, and 152e. In addition, the one or two or more nozzles 112a, 112b, 122a, 122b, 132a, 132b, 142a, 142b, 152a, and 152b may be provided at the bottom of the main body 110a in various forms considerable by one of ordinary skill in the art.

According to embodiments, the one or two or more nozzles 112a, 112b, 122a, 122b, 132a, 132b, 142a, 142b, 152a, and 152b may have various shapes. For example, the one or two or more nozzles 112a, 112b, 122a, 122b, 132a, 132b, 142a, 142b, 152a, and 152b may have shapes that protrude outward from the nozzle forming portions 112c, 122c, 132c, 142c, and 152c. Also, as another example, the one or two or more nozzles 112a, 112b, 122a, 122b, 132a, 132b, 142a, 142b, 152a, and 152b may have shapes of outlets provided at a flat surface.

Each of the nozzles 112a, 112b, 122a, 122b, 132a, 132b, 142a, 142b, 152a, and 152b may eject a forming material corresponding to each of the nozzles 112a, 112b, 122a, 122b, 132a, 132b, 142a, 142b, 152a, and 152b and may spray the forming material toward the base portion 21.

Hereinafter, several embodiments of the nozzle portions 112, 122, 132, 142, and 152 will be described.

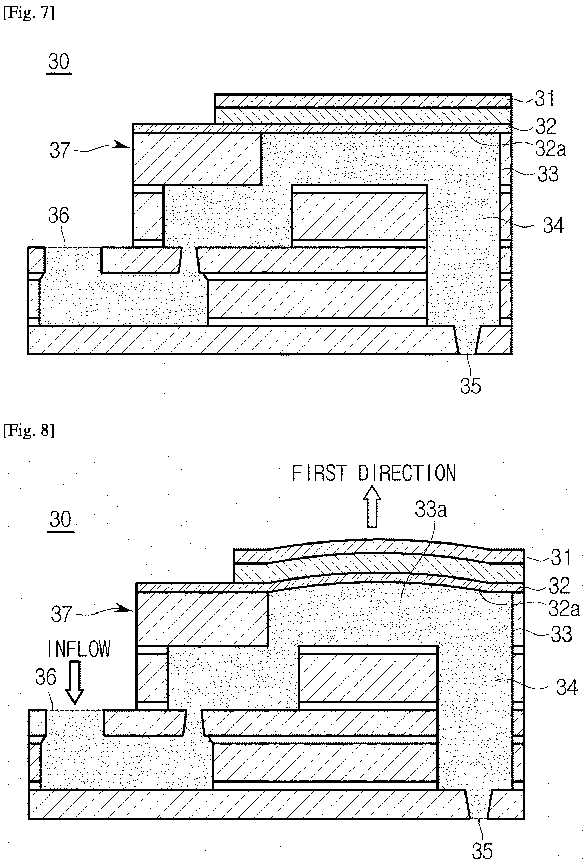

FIG. 7 is a cross-sectional view illustrating a first embodiment of the nozzle portion. In the first embodiment, a nozzle portion 30, as shown in FIG. 7, may include a main body 37, a piezoelectric element 31, a partition wall 32, an outlet 35, and a feeding inlet 36. The main body 37 may include a channel 33 thereinside. The main body 37 may include an opening 32a on one surface thereof, for example, on a top surface. The piezoelectric element 31 may be changed in shape due to a converse piezoelectric effect according to a change in voltage. The piezoelectric element 31 may use a material such as ferroelectrics and the like that generates a piezoelectric effect or converse piezoelectric effect. The piezoelectric element 31 may be provided on one surface of the main body, for example, the top surface. One surface of the partition wall 32 may be attached to the piezoelectric element 31, and the other surface thereof may be attached to one surface, for example, the top surface of the main body 37 to seal the opening 32a on the top surface of the main body 37. The partition wall 32 may be deformed according to deformation of the piezoelectric element 31 to extend or reduce a size of the channel 33. The channel 33, as shown in FIG. 7, may be formed as a micro channel that connects various chambers to one another. A forming material 34 may flow inside the channel 33. The forming material 34 may include a photocurable ink. The outlet 35 may eject outward the forming material 34 inside the channel 33 according to the deformation of the partition wall 32. The feeding inlet 36 may supply the forming material 34 into the channel 33.

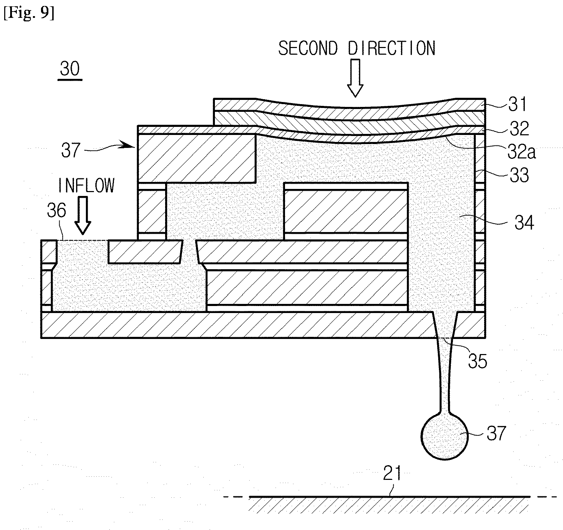

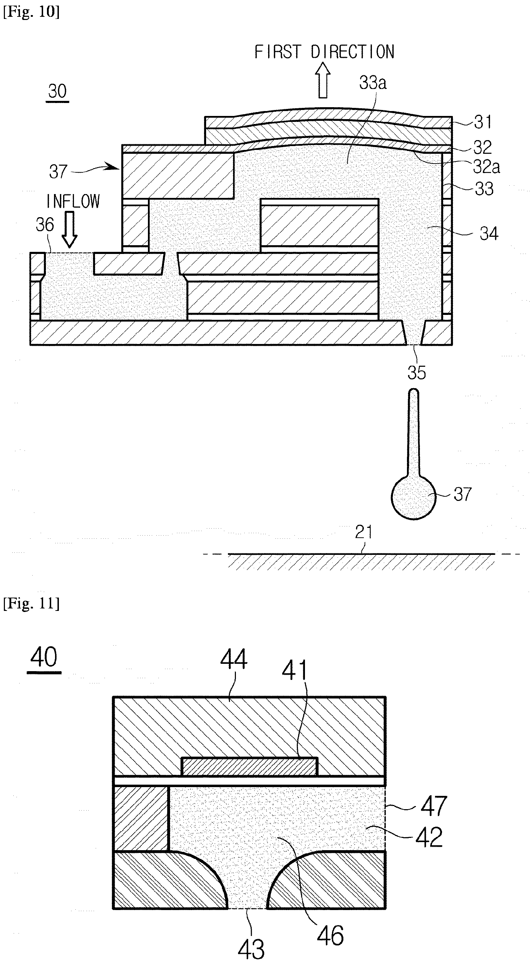

FIGS. 8 to 10 are views illustrating a principle of spraying the forming material by the first embodiment of the nozzle portion. Referring to FIGS. 8 to 10, when power is supplied to the piezoelectric element 31, the piezoelectric element 31 may be bent to be convex in a first direction according to the supplied power and the partition wall 32 attached to the piezoelectric element 31 may also be bent according to deformation of the piezoelectric element 31. When the partition wall 32 is bent, as shown in FIG. 8, an internal space 33a of the channel is extended and the forming material 34 outside may further flow through the feeding inlet 36 according to the extension of the internal space 33a. Sequentially, as shown in FIG. 9, when the piezoelectric element 31 is bent to be convex in a second direction opposite to the first direction due to a change in the power supplied to the piezoelectric element 31, the partition wall 32 may also be bent and the internal space 33a of the channel 33 may be reduced. Accordingly, the forming material 34 in the channel 33 may be ejected outward (37) through the outlet 35. As shown in FIG. 10, the ejected forming material 37 may move toward the base portion 21 due to gravitation. Meanwhile, the piezoelectric element 31 and the partition wall 32 may be bent again to be convex in the first direction and the internal space 33a of the channel 33 may be extended. Accordingly, the forming material 34 outside may flow through the feeding inlet 36.

FIG. 11 is a cross-sectional view illustrating a second embodiment of the nozzle portion. In the second embodiment, a nozzle portion 40 may include a heater 41, a chamber 42, an outlet 43, a support 44, and a feeding inlet 47. The heater 41 may be heated according to supply of external power and may generate heat. The heater 41 may employ various types of materials that generate heat according to supply of power, for example, a metal. The chamber 42 may store a forming material 46 that will be ejected through the outlet 43. The chamber 42 may be temporarily heated according to heating of the heater 41, and bubbles 45 may occur inside the chamber 42 according to heating of the chamber 42. The forming material 46 may include a photocurable ink. The outlet 43 may eject outward the forming material 46 inside the chamber 42 according to the occurrence of the bubbles 45. The support 44 may supply power to the heater 41 or may cool the heater 41 as necessary. The support 44 may include a substrate for supplying power installed therein. The feeding inlet 47 may supply the forming material 46 into the chamber 42.

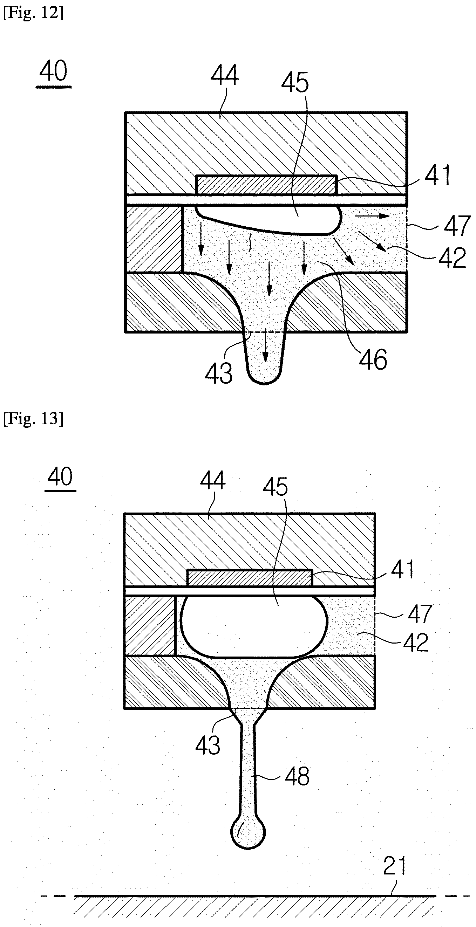

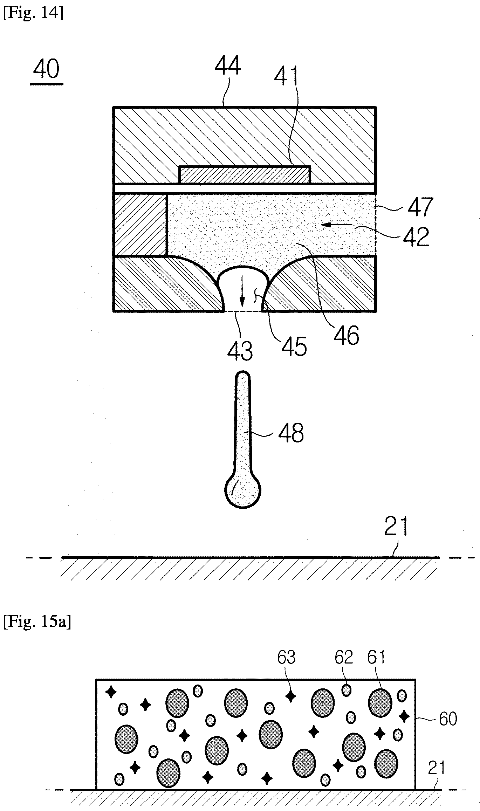

FIGS. 12 to 14 are views illustrating a principle of spraying a forming material by the second embodiment of the nozzle portion. As shown in FIGS. 12 and 13, when the heater 41 of the nozzle portion 40 instantaneously generates heat according to supplying of power, the bubbles 45 may occur inside the chamber 42. When the forming material 46 is a photocurable ink, the bubbles 45 may occur inside the chamber 42 due to a co-solvent of the photocurable ink. The bubbles 45 that occur may be extended to apply a force to the forming material 46 to eject outward the forming material 46 through the outlet 43. An ejected forming material 48 may move toward the base portion 21. As shown in FIG. 14, when the heating of the heater 41 is finished and cooled, the bubbles 45 that occur may be ejected outward through the outlet 43 or may dissipate thereinside. According to the ejection or dissipation of the bubbles 45, an empty space may be formed inside the chamber 42 and the forming material 46 may be supplied again to the formed empty space through the feeding inlet 47.

As shown in FIG. 5, the spraying portions 110 to 150 may be respectively designed to spray different forming materials a or materials. For example, the first to fourth spraying portions 110 to 140 may be designed to spray the forming material a such as a photocurable ink and the like and the support material spraying portion 150 may be designed to spray the support material s such as paraffin, glycerin or the like. In more detail, the first spraying portion 110 may be designed to spray a cyan forming material, the second spraying portion 120 may be designed to spray a magenta forming material, the third spraying portion 130 may be designed to spray a yellow forming material, and the fourth spraying portion 140 may be designed to spray a white or black forming material.

The spraying portions 110 to 150 may be controlled by the spraying controller 214 of the controller 200. The spraying controller 214 may determine a spraying time or a spraying amount according to a data analysis result of the data processor 210 and may control each of the spraying portions 110 to 150 according to the determined spraying time or spraying amount.

The leveling roller 101 may rotate about a certain shaft 102. As shown in FIGS. 6a and 6b, the leveling roller 101 may be exposed at the bottom of the main body 100a to level the stacked forming material a. The leveling roller 101 may obtain a driving force due to a roller provided inside the housing of the main body 100a to rotate. The leveling roller 101 may rotate in an arbitrary direction. A rotation direction of the leveling roller 101 may be determined according to a movement direction of the forming material spraying module 100. According to embodiments, the leveling roller 101 may not be provided at the forming material spraying module 100 unlike FIGS. 5 and 6a. In this case, the leveling roller 101 may be provided as a separate module in the shape forming apparatus 10 and may be installed above the upper surface 14 of the internal housing 13.

The leveling roller 101 may compress a forming material fixed to and stacked on the top surface of the base portion 21 or a previously fixed forming material to level one surface of the forming material, for example, a top surface thereof. Accordingly, a forming material that will be sequentially sprayed may be allowed to be sprayed and fixed to a proper position on the fixed forming material.

The leveling roller 101 may be controlled by the roller controller 215 of the controller 200. The roller controller 215 may determine a rotation direction and a rotation speed of the leveling roller 101 according to spraying of the spraying portions 110 to 150 and may generate and transmit a control signal corresponding to the determined rotation direction and rotation speed to a motor connected to the leveling roller 101 to control the leveling roller 101.

The exposure portion 160 may emit light with a certain wavelength, for example, UV rays toward the stacked forming material a or the support material s to cure the stacked forming material or support material. The exposure portion 160 may include a light emitting lamp 161 that emits light. Referring to FIGS. 6a and 6b, one forming material spraying module 100 may include a plurality of such light emitting lamps 161a and 161b. The plurality of light emitting lamps 161a and 161b may be provided at the bottom of the main body 100a, and in more detail, may be installed at a side surface of the bottom at which the nozzles 112a, 112b, 122a, 122b, 132a, 132b, 142a, 142b, 152a, and 152b are installed. When the plurality of light emitting lamps 161a and 161b are provided, even though the main body 100a of the forming material spraying module 100 moves in any direction, light may be emitted toward the forming material a or the support material s to cure the forming material a or the support material s right after the forming material a or the support material s is stacked and leveled. Although two light emitting lamps 161a and 161b are provided in FIG. 6a, the number of light emitting lamps is not limited thereto and three or more light emitting lamps 161 may be installed in the main body 100a. According to embodiments, the exposure portion 160 may not be provided at the forming material spraying module 100 unlike FIGS. 5 and 6a. In this case, the exposure portion 160 may be provided as a separate module at a particular position in the shape forming apparatus 10 to emit light toward the stacked forming material a or the support material s.

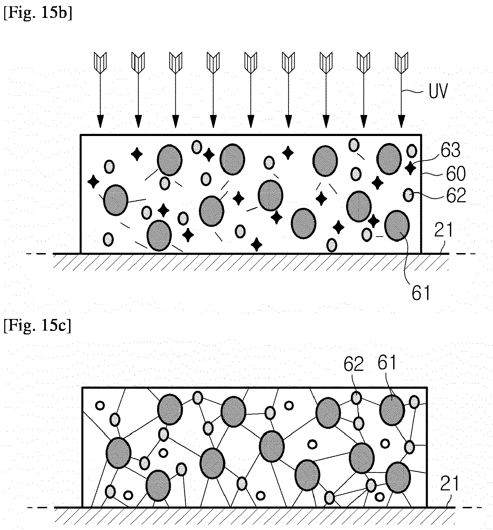

FIGS. 15a to 15c are views illustrating one embodiment of a process in which a shape is fixed by emitting UV rays. FIGS. 15a to 15c illustrate a process in which the forming material a is cured when the forming material a is a photocurable ink and the exposure portion 160 is a UV lamp that emits UV rays. Referring to FIG. 15a, a photocurable ink 60 emitted toward the base portion 21 and stacked before being cured may include an oligomer 61, a monomer 62, and a photopolymerization initiator 63. As shown in FIG. 15b, when UV rays are emitted toward the photocurable ink 60 from the outside, the photopolymerization initiator 63 in the photocurable ink 60 is decomposed into free radicals and accordingly a polymerization between the oligomer 61 and the monomer 62 may be induced. When the oligomer 61 and the monomer 62 are combined according to the polymerization, as shown in FIG. 15c, the photocurable ink 60 is cured, thereby finally forming the shape 89. Accordingly, the shape 89 may be formed using the stacked forming material a.

Referring to FIG. 6a, the plurality of connection tubes 113, 123, 133, 143, and 153 for receiving the forming material a or the support material s supplied from the external cartridges 114, 124, 134, and 144 may be connected to the main body 100a of the forming material spraying module 100. Also, the forming material spraying module 100 may further include a fastening portion 171a that connects the transfer portion 23 such as the x-axis bar 171 with the main body 100a. The fastening portion 171 a may combine the main body 100a with the transfer portion 23 to allow the main body 100a to be moved by the transfer portion 23. The fastening portion 171a, as shown in FIG. 6a, may be a through hole through which the x-axis bar 171 passes. In addition, the fastening portion 171 a may include various fastening means for connecting the main body 100a with the x-axis bar 171.

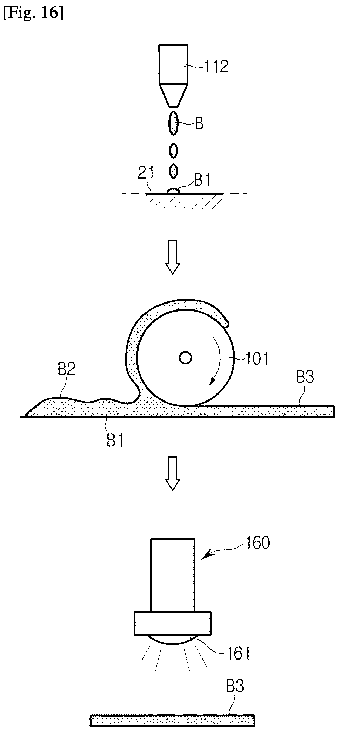

FIG. 16 is a view illustrating one embodiment of a shape forming process of a shape forming apparatus. Referring to FIG. 16, first, when a nozzle of the shape forming apparatus 10, for example, a first nozzle 112 sprays a forming material B such as a photocurable ink, the sprayed forming material B may be stacked to be layered on (B1) the base portion 21. The leveling roller 101 levels a part B2 of the layered forming material B1 that is uneven. When the light emitting lamp 161 of the exposure portion 160 emits certain light, for example, UV rays toward a leveled forming material B3, the leveled forming material B3 may be cured as described, and as a result, the shape 89 may be formed.

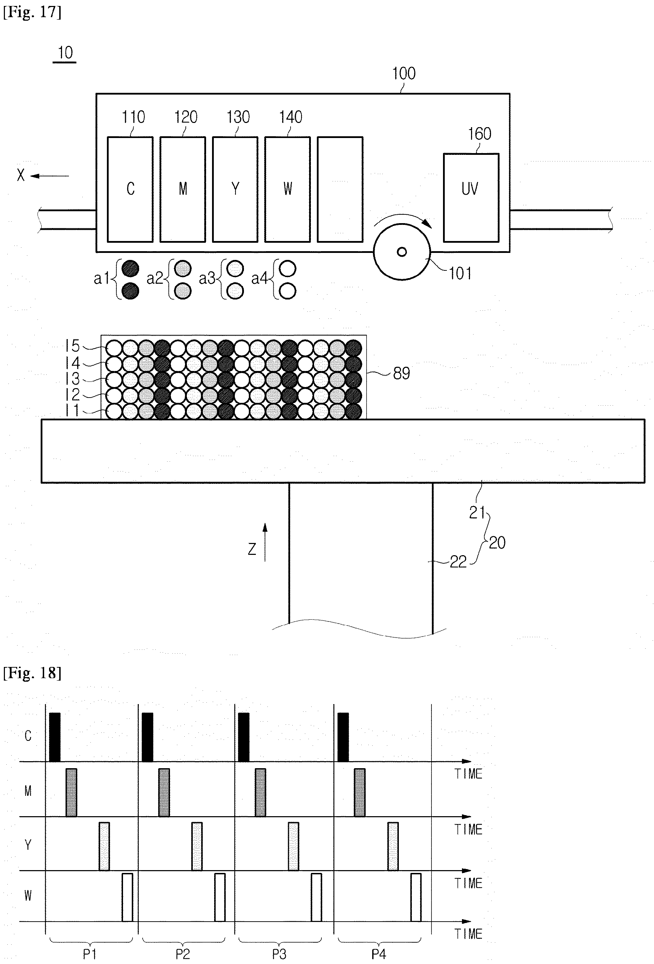

Hereinafter, referring to FIGS. 17 to 36, shape forming apparatuses according to various embodiments will be described. First, referring to FIGS. 17 to 24, a first embodiment with respect to spraying of a forming material by the shape forming apparatus will be described.

FIG. 17 is a view illustrating the first embodiment of spraying of the forming material by the shape forming apparatus. As shown in FIG. 17, the shape forming apparatus 10 may include the forming material spraying module 100 and a shape forming portion 20. The forming material spraying module 100 may include the first spraying portion 110 that sprays a forming material of cyan a1, the second spraying portion 120 that sprays a forming material of magenta a2, the third spraying portion 130 that sprays a forming material of yellow a3, the fourth spraying portion 140 that sprays a forming material of white a4, the leveling roller 101 that levels the forming materials of cyan, magenta, yellow, and white that are sprayed and layered, and the exposure portion 160 that emits UV rays toward the stacked and leveled forming materials of cyan, magenta, yellow, and white. The shape forming portion 20 may include the base portion 21 and the base portion transfer portion 22. The base portion transfer portion 22 may transfer the base portion 21 in a z-axis direction according to stacking of the forming materials a1 to a4.

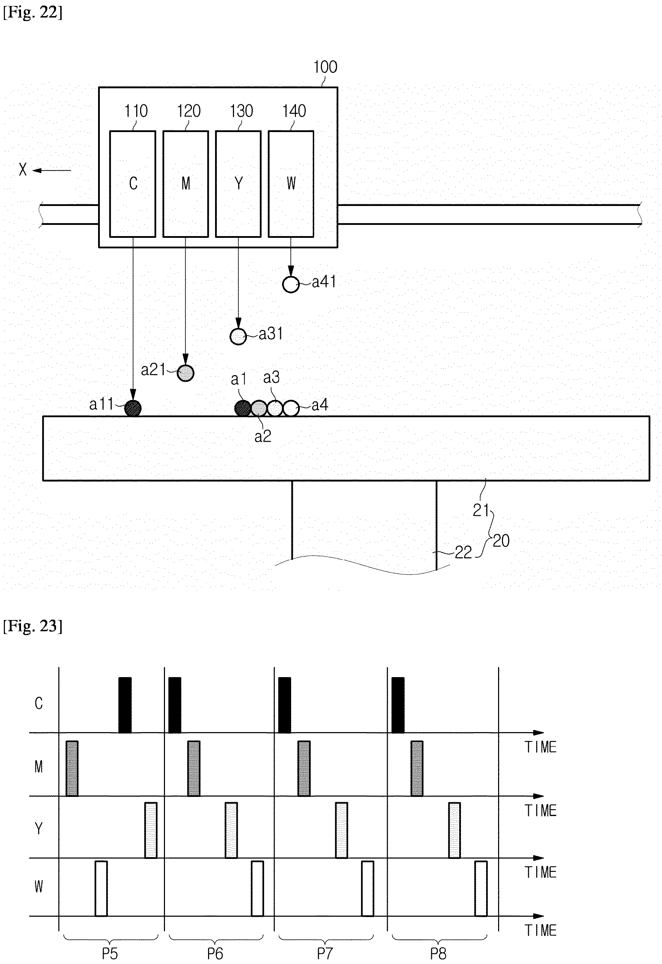

The first spraying portion 110, the second spraying portion 120, the third spraying portion 130, and the fourth spraying portion 140 of the forming material spraying module 100 may equivalently spray the forming materials a1 to a4. In detail, the first spraying portion 110, the second spraying portion 120, the third spraying portion 130, and the fourth spraying portion 140 may spray equivalent amounts of the forming materials a1 to a4. Here, the meaning of equivalence may include not only completely identical amounts but also a slight difference therebetween. Since the spraying portions 110 to 140 equivalently spray the forming materials a1 to a4, the shape 89 may be formed of equivalent amounts of the forming materials a1 to a4. The spraying portions 110 to 140 may spray the forming materials a1 to a4 to the base portion 21 according to a certain pattern. The first spraying portion 110 to the fourth spraying portion 140 may spray the forming materials a1 to a4 through a plurality of circulations P1 to P4 (refer to FIGS. 18 and 23). In this case, the first spraying portion 110 to the fourth spraying portion 140 may spray the forming materials a1 to a4 in the same pattern for each of the circulations P1 to P4, may spray the forming materials a1 to a4 in all different patterns, and may spray the forming materials a1 to a4 through only at least one circulation P1 (refer to FIG. 23) among the circulations P1 to P4 in a different pattern. The forming material spraying module 100 may continuously move while the first spraying portion 110 to the fourth spraying portion 140 spray the forming materials a1 to a4. The forming material spraying module 100 may reciprocate along the x-axis or the y-axis.

As shown in FIG. 17, the shape 89 may include a plurality of layers 11 to 15 and a different one of the forming materials a1 to a4 may be arranged for each of the layers 11 to 15. In this case, the different forming materials a1 to a4 of the layers 11 to 15 may be arranged in a certain pattern. The forming materials a1 to a4 of the layers 11 to 15 may be arranged in the same pattern. In this case, just above any one forming material 82, the same forming material 81 may be stacked.

Hereinafter, referring to FIGS. 18 to 22, a first pattern of spraying forming materials will be described.

FIG. 18 is a view illustrating the first pattern of spraying of the forming material of the shape forming apparatus. Each of the x-axes of FIG. 18 means an elapsed time, and C, M, Y, and W of the y-axis mean a spraying amount of the cyan forming material a1, a spraying amount of the magenta forming material a2, a spraying amount of the yellow forming material a3, and a spraying amount of the white forming material a4, respectively. Also, rectangles in a graph mean spraying of the forming materials a1 to a4 by the spraying portions 110 to 140. As shown in FIG. 18, the first spraying portion 110 to the fourth spraying portion 140 may sequentially spray the forming materials a1 to a4 in order of the first spraying portion 110 to the fourth spraying portion 140 for each of the circulations P1 to P4.

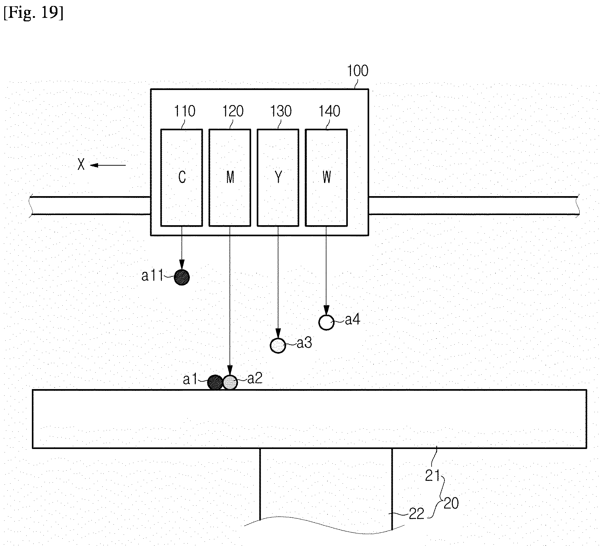

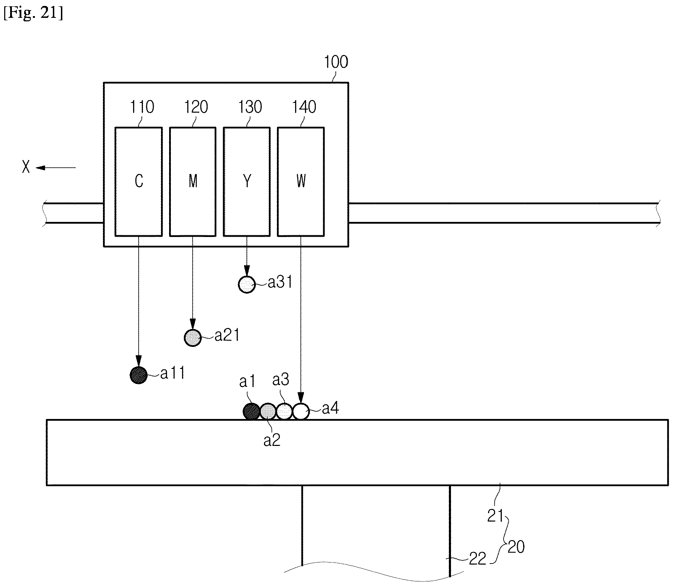

FIGS. 19 to 22 are views illustrating an embodiment of spraying the forming material by the shape forming apparatus in the first pattern. Referring to FIGS. 19 to 22, the first spraying portion 110 may spray a cyan forming material a11 in one circulation, for example, a first circulation P1. In this case, the forming materials a2 to a4 previously sprayed by the other spraying portions 120 to 140 may move toward the base portion 21 (a3 and a4) or may arrive at the base portion 21 (a1 and a2). The sprayed cyan forming material a11, after a time passes, may arrive at the base portion 21 and may be fixed to one place of the base portion 21 as shown in FIG. 21. As described above, while the first spraying portion 110 sprays the cyan forming material a11, the forming material spraying module 100 may be moving in a certain direction x. In other words, the first spraying portion 110 may spray the cyan forming material a11 while moving.

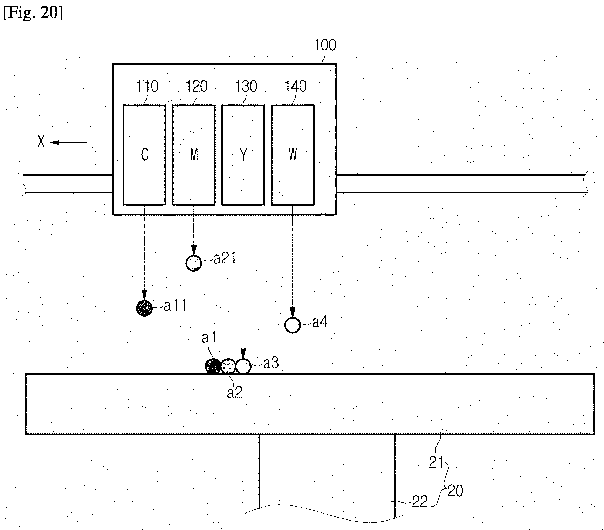

When spraying of the cyan forming material a11 by the first spraying portion 110 is finished, the second spraying portion 120 may spray a magenta forming material a21 within a certain time as shown in FIGS. 18 and 20. The magenta forming material a21 sprayed by the second spraying portion 120 may be sprayed before the cyan forming material a11 sprayed by the first spraying portion 110 arrives at the base portion 21. A spraying amount of the cyan forming material a11 of the first spraying portion 110 and a spraying amount of the magenta forming material a21 of the second spraying portion 120 may be identical or may be different. The second spraying portion 120 may also spray the magenta forming material a21 while moving. The sprayed magenta forming material a21, after a time passes, may arrive at the base portion 21 as shown in FIG. 22. In this case, the magenta forming material a21 may be fixed to a side surface of the cyan forming material a11 that is previously sprayed.

When spraying of the magenta forming material a21 by the second spraying portion 120 is finished, the third spraying portion 130 may spray a yellow forming material a31 within a certain time as shown in FIGS. 18 and 21. A spraying amount of the yellow forming material a31 of the third spraying portion 130 may be identical to or different from the spraying amount of the cyan forming material a11 of the first spraying portion 110 and the spraying amount of the magenta forming material a21 of the second spraying portion 120. Meanwhile, a time difference between a spraying time of the second spraying portion 120 and a spraying time of the third spraying portion 130 may be identical to or different from a time difference between a spraying time of the first spraying portion 110 and the spraying time of the second spraying portion 120. The third spraying portion 130 may also spray the yellow forming material a31 while moving. The yellow forming material a31 may be fixed to a side surface of the magenta forming material a21 previously fixed.

When spraying of the yellow forming material a31 by the third spraying portion 130 is finished, the fourth spraying portion 140 may spray a white forming material a41 within a certain time as shown in FIGS. 18 and 22. A spraying amount of the white forming material a41 of the fourth spraying portion 140 may be identical to or different from the spraying amount of the cyan forming material a11 of the first spraying portion 110, the spraying amount of the magenta forming material a21 of the second spraying portion 120, and the spraying amount of the yellow forming material a31 of the third spraying portion 130. The fourth spraying portion 140 may also spray the white forming material a41 while moving. The white forming material a41 may be fixed to a side surface of the yellow forming material a31 previously fixed.

When the fourth spraying portion 140 finishes spraying of the white forming material a4 and the first circulation P1 is finished, a second circulation P2 that is next to the first circulation P1 is initiated and the first spraying portion 110 may start again spraying of a cyan forming material a12. In the second circulation P2, like the first circulation P1, the forming materials a1 to a4 may be sequentially sprayed. In a third circulation P3 and a fourth circulation P4, like the first circulation P1 and the second circulation P2, the forming materials may be sequentially sprayed.

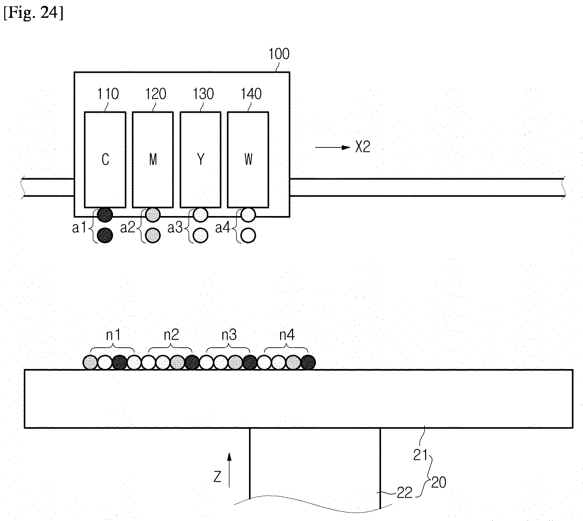

Hereinafter, referring to FIGS. 23 and 24, a second pattern of spraying forming materials will be described.

FIG. 23 is a view illustrating the second pattern of spraying forming materials of a shape forming apparatus, and FIG. 24 is a view illustrating a shape obtained as a result of spraying forming materials in the second pattern. The x-axis and the y-axis of FIG. 23 are identical to FIG. 18. As shown in FIG. 23, the first spraying portion 110 to the fourth spraying portion 140 may spray the forming materials a1 to a4 in a certain pattern for each of circulations P5 to P8. Among them, in a particular circulation, for example, a fifth circulation P5, the forming materials a1 to a4 may be sprayed differently from in the other circulations P6 to P8.

In detail, in the fifth circulation P5, first, the second spraying portion 120 may spray the magenta forming material a2 and then the fourth spraying portion 140 may spray the white forming material a4 within a certain time when the spraying of the second spraying portion 120 is finished. Sequentially, the first spraying portion 110 sprays the cyan forming material a1 and at last the third spraying portion 130 may spray the yellow forming material a3, thereby finishing the fifth circulation P5. Also, in a sixth circulation to an eighth circulation P6 to P8, the first spraying portion 110 to the fourth spraying portion 140 may sequentially spray the forming materials a1 to a4 in order of the first spraying portion 110, the second spraying portion 120, the third spraying portion 130, and the fourth spraying portion 140. In this case, spraying amounts of the forming materials a1 to a4 sprayed by the spraying portions 110 to 140 may be identical. Spraying time intervals among the spraying portions 110 to 140 may be identical or may be different. Like a case of spraying the forming materials a1 to a4 using the first pattern as described above, the forming material spraying module 100 may move in a certain direction X2.

When the first spraying portion 110 to the fourth spraying portion 140 spray the forming materials a1 to a4 in the pattern as shown in FIG. 23 and the forming material spraying module 100 moves in the certain direction X2 as shown in FIG. 24, a pattern of forming materials fixed to a section 71 corresponding to the fifth circulation P5 may be different from patterns of forming materials fixed to other sections 72 to 74. In other words, forming materials are arranged in the section 71 corresponding to the fifth circulation P5 in order of a magenta forming material a23, a white forming material a43, a cyan forming material a13, and a yellow forming material a33 and may be arranged in the other sections 72 to 74 in order of the cyan forming material a13, the magenta forming material a23, the yellow forming material a33, and the white forming material a43. When a spraying pattern is changed in only a particular circulation, for example, the fifth circulation P5, since a forming material arrangement pattern of the particular section 71 is also changed, a forming material in a color preferred by a user, for example, the magenta forming material a23 may be arranged in the particular section 71. Accordingly, when a spraying pattern is changed at an external surface of the shape 89, since it is possible to fix and arrange the forming material in the color preferred by the user on the external surface of the shape 89, a shape preferred by the user may be formed on the external surface of the shape 89.

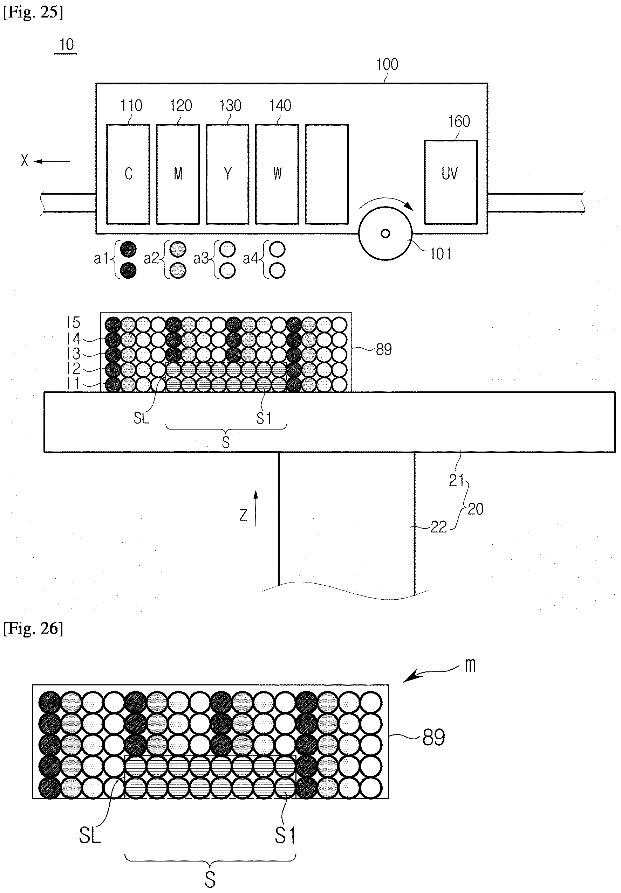

Hereinafter, referring to FIGS. 25 to 27, a second embodiment with respect to spraying of a forming material by a shape forming apparatus will be described.

FIG. 25 is a view illustrating the second embodiment of spraying the forming material of the shape forming apparatus. As shown in FIG. 25, the shape forming apparatus 10 may include the forming material spraying module 100 and the shape forming portion 20. The forming material spraying module 100 may include the first spraying portion 110 that sprays a forming material of cyan a1, the second spraying portion 120 that sprays a forming material of magenta a2, the third spraying portion 130 that sprays a forming material of yellow a3, the fourth spraying portion 140 that sprays a forming material of white a4, and the support material spraying portion 150 that sprays a support material s1. Also, the forming material spraying module 100 may include the leveling roller 101 that levels at least one of a forming material and a support material and the exposure portion 160 that emits UV rays toward at least one of the forming material and the support material. The shape forming portion 20 may include the base portion 21 and the base portion transfer portion 22 that moves the base portion 21 in a z-axis direction according to stacking of the forming materials a1 to a4 and the supporting material s1.

Like the first embodiment described with reference to FIG. 17, the first spraying portion 110 to the fourth spraying portion 140 of the forming material spraying module 100 may equivalently spray the forming materials a1 to a4. Also, the first spraying portion 110 to the fourth spraying portion 140 may spray the forming materials a1 to a4 in a certain pattern. A spraying pattern of the forming materials a1 to a4 may be identical or may be different for each circulation. Also, the first spraying portion 110 to the fourth spraying portion 140 may spray the forming materials a1 to a4 in a different pattern in some circulations. For example, the first spraying portion 110 to the fourth spraying portion 140 may spray the forming materials a1 to a4 according to a first pattern shown in FIG. 18 and may spray the forming materials a1 to a4 according to a second pattern shown in FIG. 23. The shape 89 may be formed according to spraying of the forming materials a1 to a4 by the first spraying portion 110 to the fourth spraying portion 140.

The support material spraying portion 150 may form a support s by spraying the support material s1 in a particular section that is a support forming section SL. The support material s1 may be a material that is meltable or evaporable by heat or dissoluble by a solution. Accordingly, the support s may also be meltable or evaporable by heat or may be dissoluble by a certain solution and may vary in phase due to heat or a solution to be removed from the shape 89. The support material spraying portion 150 may form the support s by intensively spraying the support material s1 to the support forming section SL that needs the support s. The support material spraying portion 150 may not at all spray the support material s1 to other sections than the support forming section SL that needs the support s. In this case, the first spraying portion 110 to the fourth spraying portion 140 may not spray any forming materials a1 to a4 to the support forming section SL and may spray the forming materials a1 to a4 as necessary. A size of a droplet of the support material s1 sprayed by the support material spraying portion 150 may be identical to or different from a size of droplets of the forming materials a1 to a4 sprayed by the first spraying portion 110 to the fourth spraying portion 140.

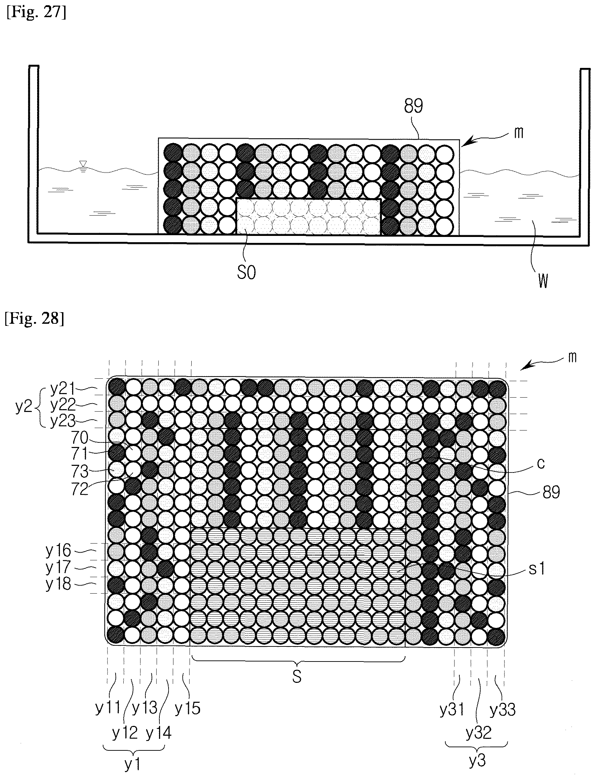

FIGS. 26 and 27 are views illustrating a shape obtained according to the second embodiment. When the support material spraying portion 150 sprays the support material s1 to a particular section and the first spraying portion 110 to the fourth spraying portion 140 equivalently spray the forming materials a1 to a4, an object m having the form in which the support s and the shape 89 are combined may be obtained as shown in FIG. 26. Here, the support s may be formed of the support material s1 and the shape 89 may be formed of the forming materials a1 to a4. When the support material s1 is water-solubles such as glycerin and the like, the support s formed of the water-soluble support material s1 is dissolved in water and disappears (s0) and finally only the shape 89 remains when the object m is dipped in water w as shown in FIG. 27. Accordingly, the shape 89 in various shapes may be obtained. Depending on the characteristic of the support material s1, various materials such as alcohol and the like may be used instead of water as a solvent for dissolving the support s. When the support material s1 is a material such as paraffin melted by heat and the like, the support s may be melted and removed (s0) from the object m by applying directly or indirectly heat to the support s of the object m.

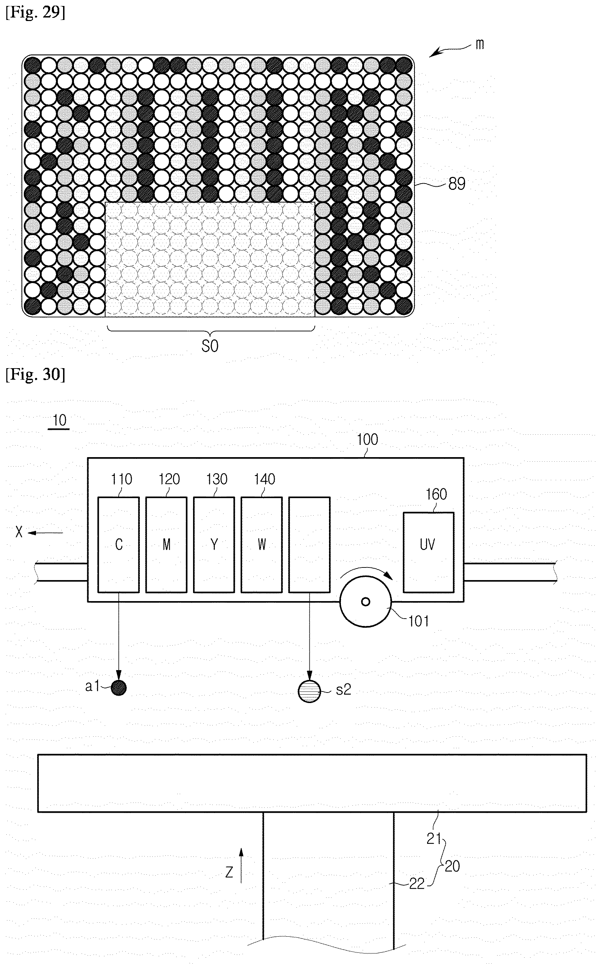

Hereinafter, referring to FIGS. 28 and 29, a third embodiment with respect to spraying of a forming material by a shape forming apparatus will be described.

FIG. 28 is a view illustrating the third embodiment of spraying of the forming material by the shape forming apparatus, and FIG. 29 is a view illustrating a shape obtained according to the third embodiment. Referring to FIG. 28, in forming the shape 89, the inside of the shape 89 such as a central part c may be formed by spraying the forming materials a1 to a4 by the first spraying portion 110 to the fourth spraying portion 140 using the same first pattern as shown in FIG. 18 and peripheries y1 to y3 of the shape 89 may be formed by spraying the forming materials a1 to a4 by the first spraying portion 110 to the fourth spraying portion 140 using a second pattern different from the first pattern. Here, the first spraying portion 110 may spray a forming material of cyan a1, the second spraying portion 120 may spray a forming material of magenta a2, the third spraying portion 130 may spray a forming material of yellow a3, and the fourth spraying portion 140 may spray a forming material of white a4.

For example, the forming material spraying module 100 may be controlled to spray any one of the cyan forming material a1, the magenta forming material a2, the yellow forming material a3, and the white forming material a4 to a first row y11 of a first periphery y1 that forms a surface of the shape 89 when the first periphery y1 is a side surface of the shape 89 and to spray only the white forming material a4 to a second row y12 that is in contact with the first row y11 and a subsurface positioned inside. Then, as shown in FIG. 28, a forming material 71 in a different color may be sprayed and fixed to the first row y11 that is the surface and a white forming material 70 may be sprayed and fixed to the second row y12 beneath the surface y11. According to embodiments, the forming material spraying module 100 may be controlled to spray and fix only one of the forming materials a1 to a3 except the white forming material a4 to the first row y11 and to spray and fix only the white forming material a4 to the second row y12 through the first spraying portion 110 to the fourth spraying portion 140. When only the white forming material 70 is fixed to the second row y12 in contact with the first row y11 that is the surface, color formation of the forming material 71 fixed to the first row y11 may become closer to a color originally intented.

According to one embodiment, when a white forming material 73 is fixed to the first row y11 that is the surface, a forming material in a different color except the white forming material a4, for example, a cyan forming material 72 may be sprayed and fixed to the second row y12. In this case, color formation by the white forming material 73 becomes more defined in such a way that it is possible to prevent a problem that occurs at the fourth spraying portion 140 because the fourth spraying portion 140 that sprays the white forming material a4 is more frequently used than the other spraying portions 110 to 130.

Meanwhile, when forming materials in certain colors, for example, the cyan forming material a1 and the white forming material a4 are sprayed and fixed to the first row y11 and the second row y12, forming materials in different colors that are not sprayed, for example, the magenta forming material a2 and the yellow forming material a3 may be sprayed and fixed to a third row y13 in contact with and positioned more inside than the second row y12 and a fourth row y14 in contact with and positioned more inside than the third row y13.

As described above, when it is controlled to mainly spray only the white forming material a4 to the second row y12 while the forming materials a1 to a4 are sprayed to the first row y11, the second row y12, and the rows y13 and y14 on the periphery thereof, patterns of layers y16 to y18 may be different unlike FIG. 15. In detail, the patterns of the layers y16 to y18 may be changed according to colors of forming materials that are to be arranged on the surface, that is, at the first row y11. Accordingly, a forming material in a different color may be stacked just above a forming material of any one layer y16.

It will be identically applied to a third periphery y3 of another side of the shape 89. In other words, the first spraying portion 110 to the fourth spraying portion 140 may be controlled to spray any one of the cyan forming material a1, the magenta forming material a2, the yellow forming material a3, and the white forming material a4 to a fifth row y33 that forms the surface of the shape 89 at the third periphery y3 and to spray only the white forming material a4 to a sixth row y32 in contact with and positioned more inside than the fifth row y33. Also, the first spraying portion 110 to the fourth spraying portion 140 may be controlled to spray only one of the other forming materials a1 to a3 than the white forming material a4 to the fifth row y33 and to spray only the white forming material a4 to the sixth row y32. Also, the first spraying portion 110 to the fourth spraying portion 140 may be controlled to spray the white forming material a4 to the fifth row y33 and to spray the other forming materials a1 to a3 except the white forming material a4 to the sixth row y32. In addition, the first spraying portion 110 to the fourth spraying portion 140 may be controlled to spray and fix forming materials in different colors that are not sprayed, for example, the magenta forming material a2 and the yellow forming material a3 to a seventh row y31 in contact with and positioned more inside than the sixth row y32.

Also, the first spraying portion 110 to the fourth spraying portion 140 may be controlled to spray and fix any one of the cyan forming material a1, the magenta forming material a2, the yellow forming material a3, and the white forming material a4 to an eighth row y15 that is in contact with the support s formed of the support material s1 and may become the surface exposed outward according to removing the support s and to spray only the white forming material a4 to a ninth row y16 inside the eighth row y15. The first spraying portion 110 to the fourth spraying portion 140 may be controlled to spray a forming material in a different color except the white forming material a4 to the ninth row y16 when the white forming material a4 is sprayed and fixed to the eighth row y15.

Also, it will be identically applied to a second periphery y2 of the shape 89. The second periphery y2 of the shape 89 may be a top surface of the shape 89. The top surface of the shape 89 may be one of external surfaces of the shape 89 that is positioned in a direction in which the first spraying portion 110 to the fourth spraying portion 140 are positioned. In this case, when a second layer y22 positioned beneath a surface layer y21 at the second periphery y3 is formed, only the fourth spraying portion 140 may spray the white forming material a4 and the other spraying portions 110 to 130 may stop spraying. Sequentially, when a first layer y21 that forms the surface of the shape 89 is formed, any one of the first spraying portion 110 to the fourth spraying portion 140 may spray the forming materials a1 to a4. When the first layer y21 is formed, only the other spraying portions 110 to 130 except the fourth spraying portion 140 that sprays the white forming material a4 may spray the forming materials a1 to a3. When the fourth spraying portion 140 sprays the white forming material a4 to form the first layer y21, any one of the first spraying portion 110 to the third spraying portion 130 sprays the forming materials a1 to a3 to one position of the second layer y22 corresponding to a position to which the white forming material a4 is to be fixed, thereby fixing the forming materials a1 to a3 in other colors except the white forming material a4 to a position corresponding to the position to which the white forming material a4 is to be fixed. A third layer y23 positioned below the second layer y22 may be formed by the forming materials a1 to a4 equivalently sprayed by the first spraying portion 110 to the fourth spraying portion 140 according to a predefined pattern.

According to one embodiment, the support s formed of the support material s1 sprayed by the support material spraying portion 150 may be combined with the shape 89 formed as described above. Referring to FIG. 29, when the support material s1 is water-solubles such as glycerin and the like as described above, the shape 89 may be obtained by removing the support s from the object m (s0) using water w as a solvent. Depending on the characteristic of the support material s1, various materials may be used as the solvent. When the support material s1 is paraffin meltable by heat, the support s may be removed from the object m (s0) by applying heat to the support s using various heaters.

Hereinafter, referring to FIGS. 30 to 32, a fourth embodiment with respect to spraying forming materials by a shape forming apparatus will be described.

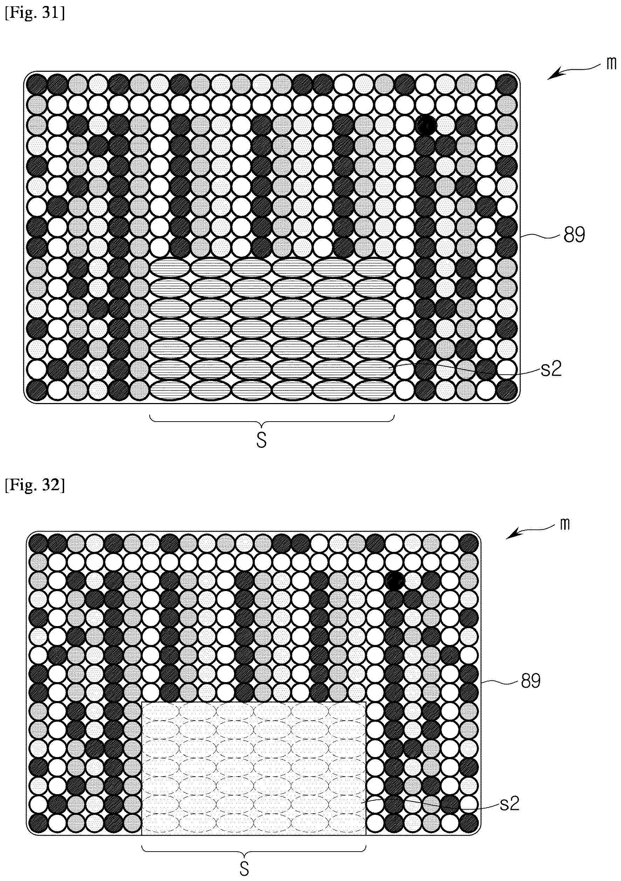

FIG. 30 is a view illustrating the fourth embodiment of spraying of the forming materials by the shape forming apparatus, and FIGS. 31 and 32 are views illustrating a shape obtained according to the fourth embodiment. As shown in FIG. 30, the support material spraying portion 150 may spray a support material s2 having a droplet larger than droplets of the forming materials a1 to a4 sprayed by the other spraying portions 110 to 140. According to one embodiment, the size of the droplet of the support material s2 may be two times or more than the size of the droplets of the forming materials a1 to a4. Here, the size of a droplet may be understood as a concept including a radius, a volume or the like of the droplet. When the support material spraying portion 150 sprays the support material s2 having the droplet larger than those of the forming materials a1 to a4, the support s may be more quickly formed. As a result thereof, as shown in FIG. 31, the object m in which the support material s2 having a larger droplet and the shape 89 are combined may be obtained as shown in FIG. 31. The object m in which the support material s2 having the larger droplet and the shape 89 are combined as described above may also be removed by heat or a solvent as described above. When the support material s2 is water-solubles such as glycerin, the support s may be removed (s0) from the object m using water as a solvent. When the support material s2 is paraffin melted by heat, the support s may be removed (s0) from the object m by applying heat to the support s. As a result thereof, the shape 89 may be obtained as shown in FIG. 32.

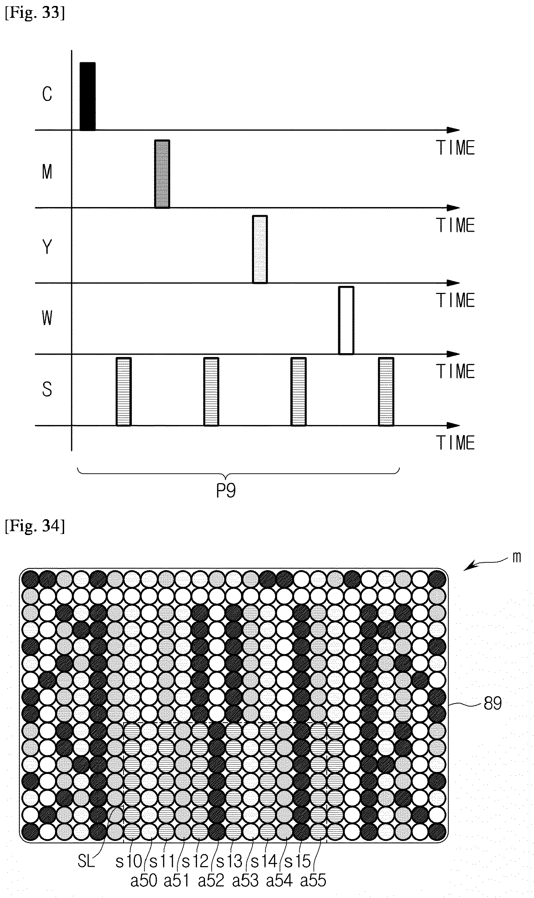

Hereinafter, referring to FIGS. 33 and 34, a fifth embodiment with respect to spraying forming materials by a shape forming apparatus will be described. FIGS. 33 and 34 are views illustrating the fifth embodiment of spraying forming materials by the shape forming apparatus.

As shown in FIG. 33, the spraying portions 110 to 140 and the support material spraying portion 150 may be controlled to form a plurality of supports s10 to s15 not to be in contact with and be separated from one another by stacked forming materials a50 to a55. For this, according to one embodiment, the spraying portions 110 to 140 and the support material spraying portion 150 may intersect with one another and spray the forming materials a1 to a4 and the support material s1 to the support forming section SL to form the plurality of supports s10 to s15 partitioned by the forming materials a50 to a55 stacked as shown in FIG. 34. In other words, the first spraying portion 110 sprays the cyan forming material a1 first, the support material spraying portion 150 sprays the support material s1 sequentially, the second spraying portion 120 sprays the magenta forming material a2, and the support material spraying portion 150 sprays the support material s1 to form the plurality of supports s10 to s15 partitioned by the forming materials a50 to a55.

As necessary, after the support material spraying portion 150 sprays the support material s1, two or more of the plurality of spraying portions 110 to 140 continuously may spray the forming materials a50 to a55 and sequentially the support material spraying portion 150 may spray the support material s1. For example, to form the supports s10 and s15 at a part in contact with the shape 89, depending on embodiments, a plurality of spraying portions, for example, the first spraying portion 110 and the second spraying portion 120 may continuously spray the forming materials a54 and a55 and sequentially the support material spraying portion 150 may spray the support material s1.

According to embodiments, the first spraying portion 110 to the fourth spraying portion 140 and the support material spraying portion 150 do not intersect with one another and spray the forming materials a1 to a4 and the support material s1 as described above, and the first spraying portion 110 to the fourth spraying portion 140 may spray the forming materials a1 to a4 first and then the support material spraying portion 150 may spray the support material s1. In detail, the first spraying portion 110 to the fourth spraying portion 140 may spray the forming materials a1 to a4 in the support forming section SL to space the forming materials a1 to a4 previously sprayed to be apart and to form a certain-sized space among the forming materials a1 to a4. In other words, the forming materials a1 to a4 may be sprayed to be fixed and stacked not to close to one another. Here, the certain-sized space may be equal to or larger than the size of the droplet of the support material. According to embodiments, the space may be two times or more of the size of the droplet. As necessary, some of the forming materials a1 to a4 in the support forming section SL may be sprayed to be fixed and stacked close to one another. Sequentially, the support material spraying portion 150 may spray the support material s1 to spaces among the forming materials a1 to a4. In this case, a movement speed of the forming material spraying module 100 may be adjusted to allow the forming materials a1 to a4 sprayed by the first spraying portion 110 to the fourth spraying portion 140 to be spaced apart at a certain interval and fixed into the support forming section SL.

As described above, also when the first spraying portion 110 to the fourth spraying portion 140 and the support material spraying portion 150 are controlled, the plurality of supports s10 to s15 formed as described above may be divided by the stacked forming materials a50 to a55.

Meanwhile, the first spraying portion 110 to the fourth spraying portion 140 may spray the forming materials a1 to a4 according to a predefined pattern in other sections than the support forming section SL. In the other sections than the support forming section SL, the support material spraying portion 150 may not spray the support material s1. As a result thereof, the object m formed of the shape 89, the stacked forming materials a50 to a55, and the plurality of supports s10 to s15 partitioned by the stacked forming materials a50 to a55 may be obtained.

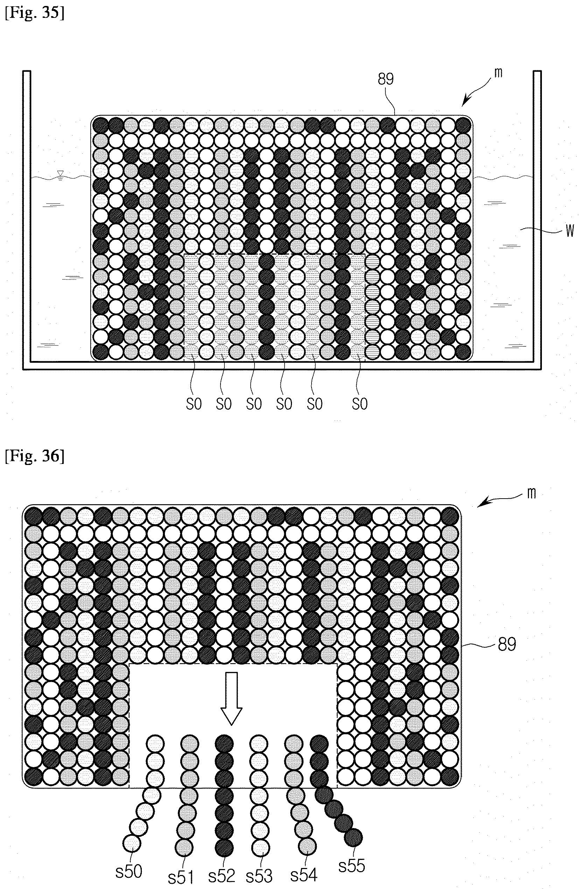

FIGS. 35 and 36 are views illustrating a process of removing a support material of the shape obtained according to the fourth embodiment. When the support material s1 is water-solubles such as glycerin and the like, the object m is precipitated in the water w to remove the supports s10 to s15 from the object m (s0). When the support material s1 is paraffin meltable by heat, the supports s10 to s15 may be removed from the object m (s0) by applying heat to the supports s10 to s15. When the supports s10 to s15 are removed, the stacked forming materials a50 to a55 that remain may be removed, for example, by a proper cutter and the like or may be manually removed. Accordingly, it is possible to obtain the same effect as that of a case of forming the support s using only the support material s1 while using relatively less the support material s1.

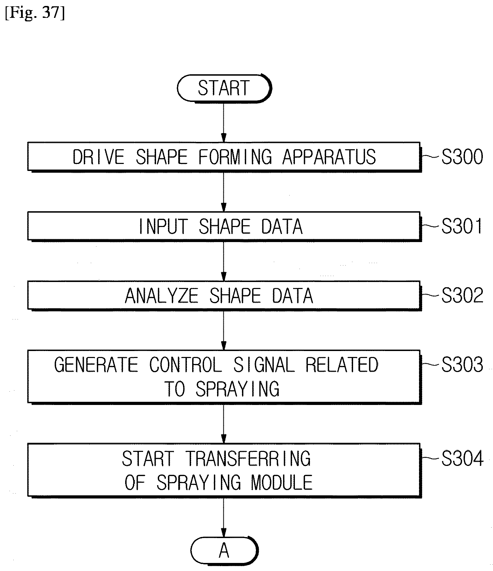

Hereinafter, several embodiments of a method controlling the shape forming apparatus will be described with reference to FIGS. 37 to 41.

FIG. 37 is a flowchart illustrating one embodiment of a process before the forming material spraying module moves in the method of controlling the shape forming apparatus.

As shown in FIG. 37, first, the shape forming apparatus 10 starts driving according to operating of a power button by a user (s300). In this case, power is applied to various components of the shape forming apparatus 10 and an operating system (OS) stored in the storage portion 202 and the like is loaded, thereby booting up the shape forming apparatus 10.

When the booting up of the shape forming apparatus 10 is finished, the shape forming apparatus 10 may receive shape data (s301). The user may directly input the shape data into the shape forming apparatus 10 by operating the operation portion 203 such as a keyboard and the like. Also, the user may input the shape data into the shape forming apparatus 10 by using the data input portion 21. For example, the user may insert a USB in which the shape data is stored into a USB port and then transfer the shape data to the shape forming apparatus 10 to input the shape data into the shape forming apparatus 10. Also, the user may input the shape data into the shape forming apparatus 10 through a wired communication network or a wireless communication network.

When the shape data is input, the shape forming apparatus 10 may determine how to control the forming material spraying module 100 to form the shape 89 by analyzing the input shape data (s302). For example, when the shape data is input, a spraying position, a spraying amount, a spraying pattern or the like of the forming material a may be determined based on the shape data.

When a method of controlling the forming material spraying module 100 is determined, according to the determined controlling method, control signals related to the respective spraying portions 110 to 150 of the forming material spraying module 100 or the transfer portion 23 may be generated (s303) and the generated control signals may be transmitted to the spraying portions 110 to 150 of the forming material spraying module 100 or the transfer portion 23, respectively.

The forming material spraying module 100 may transfer the forming materials to spraying positions according to the control signals (s304). The forming material spraying module 100 may spray the forming materials after transferring the forming materials to the spraying positions. The forming material spraying module 100 may spray the forming materials while moving.

Hereinafter, several embodiments of spraying the forming materials by the shape forming apparatus 10 in the method of controlling the shape forming apparatus 10 will be described.

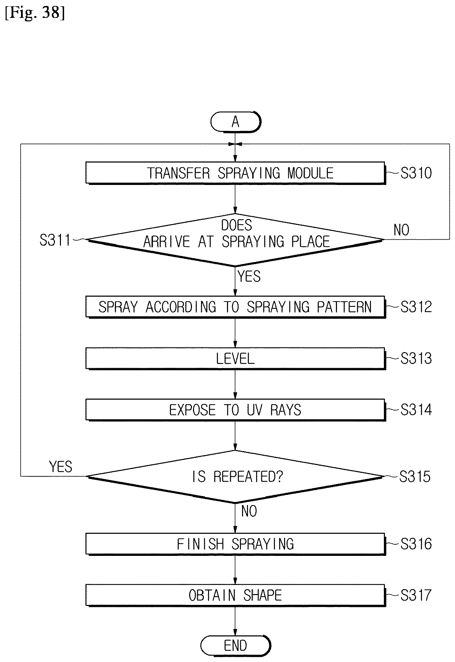

FIG. 38 is a flowchart illustrating a first embodiment of the method of controlling the shape forming apparatus.

As shown in FIG. 38, when the forming material spraying module 100 moves (s310) and arrives at a spraying place for spraying the forming materials (s311), the forming material spraying module 100 may equivalently spray the forming materials according to a determined spraying pattern (s312). For example, the forming material spraying module 100 may sequentially spray the cyan forming material, the magenta forming material, the yellow forming material, and the white forming material according to a predefined order. Here, equivalent spraying amounts may include completely identical spraying amounts of the forming materials sprayed by the respective spraying portions for a certain period. Also, in addition, the equivalent spraying amounts may include a certain degree of a slight difference within an allowable range between spraying amounts.

The forming materials may include the cyan forming material, the magenta forming material, the yellow forming material, and the white forming material. In this case, each of the cyan forming material, the magenta forming material, the yellow forming material, and the white forming material may be sprayed by each of the spraying portions 110 to 140 corresponding thereto. The spraying portions 110 to 140 may spray equivalent amounts of the cyan forming material, the magenta forming material, the yellow forming material, and the white forming material. For example, during one circulation, the cyan forming material, the magenta forming material, the yellow forming material, and the white forming material may be sprayed the same number of times.

The sprayed forming material may be fixed to the top surface of the base portion 21 or fixed above a previously fixed forming material. When the forming material is sprayed and stacked on the top surface of the base portion 21 or the previously fixed forming material, the leveling roller 101 may compress the stacked forming material to level the forming material (s313). When the forming material is leveled, sequentially, a forming material that will be sprayed may be properly fixed to a position for being fixed.

When the sprayed and fixed forming material is leveled, the exposure portion 160 may emit light with a certain wavelength, for example, UV rays toward the stacked forming material and the forming material exposed to the UV rays may be cured (s314).

The operation s312 of spraying the forming material to the operation s314 of exposing to the UV rays described above may be performed at the same time and may be sequentially performed. The operation s312 of spraying the forming material to the operation s314 of exposing to the UV rays described above may be performed repeatedly until the shape 89 that the user would like to form is formed (s315). In the operation s315 of repeating, the forming material spraying module 100 may continuously move and the spraying portions 110 to 150 may spray the forming materials at proper positions while the forming material spraying module 100 moves. In addition, the leveling roller 101 and the exposure portion 160 may also perform the operations s313 and s314 described above.

When the forming material is sprayed to all sections according to the shape data, the forming material spraying module 100 may finish spraying of the forming material (s316). As a result thereof, the user may obtain a shape (s317).

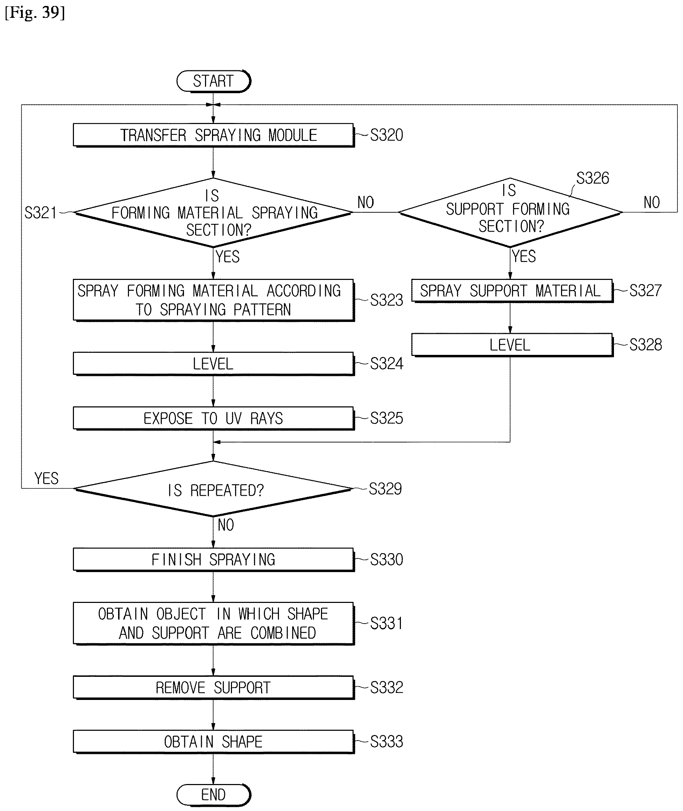

FIG. 39 is a flowchart illustrating a second embodiment of the method of controlling the shape forming apparatus.

As shown in FIG. 39, as described above, when the forming material spraying module 100 moves according to a control signal generated based on the shape data (s320) and arrives at a forming material spraying section (s321), the forming material may be equivalently sprayed according to a predefined spraying pattern (s323). For example, when the forming materials include a cyan forming material, a magenta forming material, a yellow forming material, and a white forming material, the forming materials may be sprayed in order of the cyan forming material, the magenta forming material, the yellow forming material, and the white forming material. When a forming material is sprayed and stacked on the top surface of the base portion 21 or a previously fixed forming material, the leveling roller 101 may compress the stacked forming material to level the forming material (s324) and the exposure portion 160 may emit light with a certain wavelength toward the stacked forming material to cure the forming material (s325). The operation s323 of spraying the forming material to the operation s325 of exposing to the UV rays may be performed at the same time and may be sequentially performed.

When the forming material spraying module 100 moves (s320) and arrives at a support forming section (s326), the support material spraying portion 150 may spray a support material to the support forming section positioned at the shape forming portion 20 (s327). When arriving at the support forming section, the other spraying portions 110 to 140 may not spray the forming materials and only the support material spraying portion 150 may spray the support material. The support material may be stacked to form a support. According to embodiments, the sprayed support material may be leveled by the leveling roller 101 (s328).

The operation s323 of spraying the forming material to the operation s325 of exposing to UV rays and the operations s326 to s328 of spraying the support material may be repeatedly performed until an object 8 desired by the user in which the shape 89 and the support s are combined is formed (s329). In the operation s315 of repeating, the forming material spraying module 100 may continuously move and the spraying portions 110 to 150 may spray the forming materials to the forming material spraying section to form the shape 89 and the support material spraying portion 150 may spray the support material to the support forming section to form the support s while the forming material spraying module 100 moves.

When spraying is finished, the object 8 in which the shape 89 and the support s are combined may be obtained (s331). When the object 8 in which the shape 89 and the support s are combined is obtained, the support s may be removed according to the characteristic of the support material (s332). When the support material is a material meltable or evaporable by heat, the support s may be removed by applying heat to the support s. When the support material is dissoluble by a certain solvent, the support s may be removed by dissolving the support s using a method of sprinkling the solvent on the object 8. When the support s is removed, a shape in a certain shape may be obtained (s333).

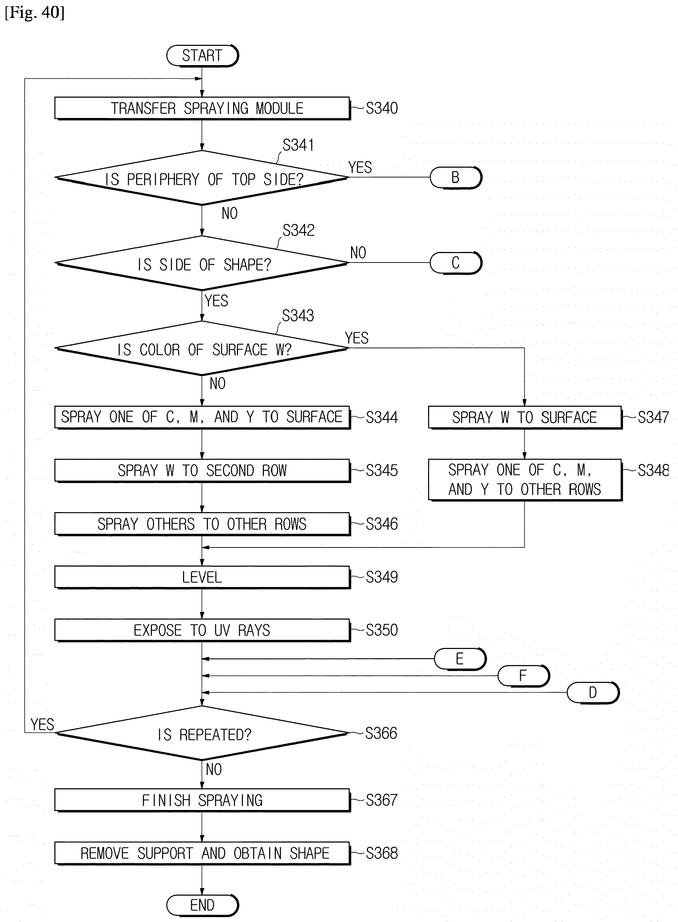

FIGS. 40 to 42 are flowcharts illustrating a third embodiment of the method of controlling the shape forming apparatus. FIGS. 40 to 42 relate to the method of controlling the shape forming apparatus 10 in which the forming material spraying module 100 is capable of spraying a cyan forming material, a magenta forming material, a yellow forming material, a white forming material, and a support material. According to embodiments, a forming material or a support material that is sprayed may be omitted.

As shown in FIGS. 40 to 42, as described above, the forming material spraying module 100 may move to a place for forming a shape according to a control signal generated based on shape data (s341).

When the forming material spraying module 100 sprays a forming material not to form the top surface that is the surface positioned at the top of the shape 89 or a periphery of the top surface (NO in s341), to form the side surface of the shape 89 and a periphery thereof (YES in s342), and a part of the surface to which the forming material is sprayed is not white (NO in s343), the forming material spraying module 100 may spray at least one of a cyan forming material, a magenta forming material, and a yellow forming material to a part corresponding to the surface of the shape 89 according to shape data (s344). Meanwhile, the forming material spraying module 100 may spray a white forming material to a second row that is a subsurface in contact with and positioned more inside than the surface of the forming material spraying module 100 (s345). In addition, the forming material spraying module 100 may spray other forming materials that are not sprayed to the surface, for example, two others of the cyan forming material, the magenta forming material, and the yellow forming material to a third row in contact with and positioned more inside than the second row and a fourth row in contact with and positioned more inside than the third row (s346). The operation s344 of spraying the forming material to the surface, the operation s345 of spraying the white forming material to the second row, and the operation s346 of spraying the other forming materials to the other rows may be sequentially performed and may be performed at the same as shown in FIG. 40. Also, an order of performing the operations s344 to s346 described above may be changed. In other words, the white forming material may be sprayed to the second row first (s345) and any one of the cyan forming material, the magenta forming material, and the yellow forming material may be sprayed to the surface (s344).

When a surface to which a forming material is to be sprayed according to shape data is white (YES in s343), the forming material spraying module 100 may spray a white forming material to a part corresponding to the surface of the shape 89 (s347). Additionally, the cyan forming material, the magenta forming material, and the yellow forming material may be sprayed to other parts than the surface, for example, other rows including the second row (s348). The operation s347 and the operation s348 may be performed at the same time or may be sequentially performed. Also, an order of performing the operations s347 and s348 may be changed.

When a forming material is sprayed and then fixed and stacked, the leveling roller 101 may compress and level the fixed and stacked forming material (s349) and the forming material may be cured by UV rays emitted by the exposure portion 160 (s350).

When the forming material spraying module 100 sprays a forming material to form a top surface that is the surface positioned at the top of the shape 89 or a periphery of the top surface (YES in s341), the forming material spraying module 100 may operate unlike the above description.

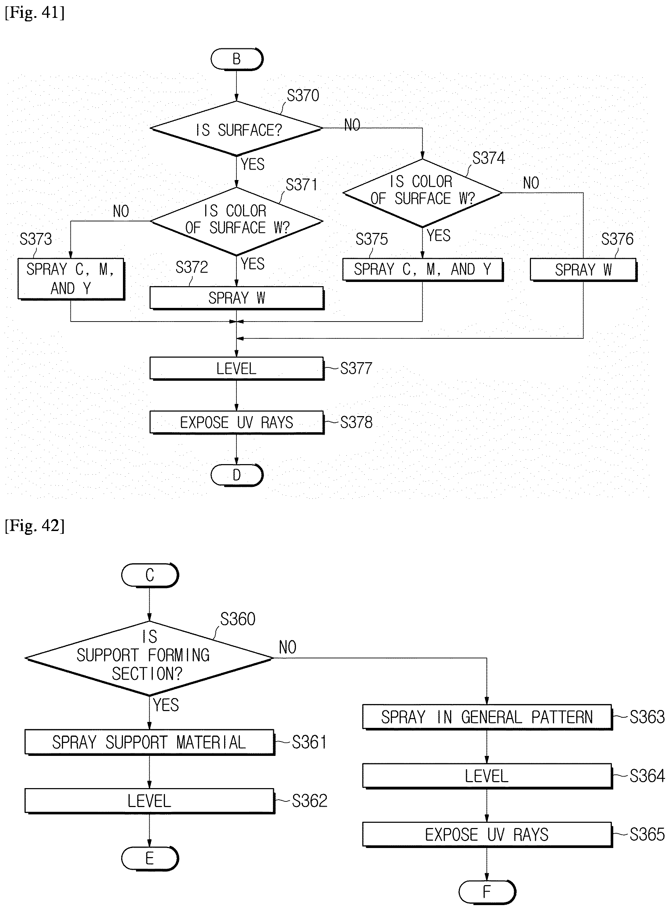

In detail, referring to FIG. 41, when the forming material spraying module 100 forms the periphery of the top surface that is not the top surface that is the surface positioned at the top of the shape 89, for example, a subsurface positioned beneath the top surface (YES in s370) and the white forming material is sprayed to one place of the surface corresponding to one place of the subsurface in such a way that a color of the surface is white (YES in s374), any one of the cyan forming material, the magenta forming material, and the yellow forming material may be sprayed to the one place of the subsurface (s375). When the white forming material is not sprayed and any one of the cyan forming material, the magenta forming material, and the yellow forming material is sprayed to one place of the surface corresponding to the one place of the subsurface (NO in s374), the white forming material may be sprayed to the one place of the subsurface (s376).

When the forming material spraying module 100 forms the top surface that is the surface positioned at the top of the shape 89 (YES in s370) and the one place of the surface is white (YES in s371), the white forming material may be sprayed to the one place of the surface (s372). When the one place of the surface is not white, one of the cyan forming material, the magenta forming material, and the yellow forming material that has a necessary color may be sprayed according to the shape data (s373).

When a forming material is sprayed and then fixed and stacked, the leveling roller 101 may compress and level the fixed and stacked forming material (s377) and the forming material may be cured by UV rays emitted by the exposure portion 160 (s378).

When the forming material spraying module 100 sprays a forming material not to form the top surface that is the surface positioned at the top of the shape 89 or the periphery of the top surface (NO in s341), not to form the side surface of the shape 89 and a periphery thereof (NO in s342), and the forming material spraying module 100 arrives at the support forming section (YES in s360), the forming material spraying module 100 may form a support by spraying a support material to the support forming section (s361). The formed support may be leveled by the leveling roller 101 (s362).

When the forming material spraying module 100 sprays a forming material not to form the top surface that is the surface positioned at the top of the shape 89 or the periphery of the top surface (NO in s341), not to form the side surface of the shape 89 and a periphery thereof (NO in s342), and the forming material spraying module 100 does not arrive at the support forming section (NO in s360), the forming material spraying module 100 may spray the forming material according to a general pattern (s363). For example, the forming material spraying module 100 may sequentially spray the cyan forming material, the magenta forming material, the yellow forming material, and the white forming material. After the forming material is sprayed and then fixed and stacked, the leveling roller 101 may compress and level the fixed and stacked forming material (s364). The exposure portion 160 may emit UV rays toward the stacked forming material and the forming material may be cured by the emitted UV rays (s365).

The operations s341 to s365 and s370 to s378 described above may be repeatedly performed until the shape 89 desired by a user is formed. The forming material spraying module 100 may be moving according to a control signal generated by the controller 200 while the operations s341 to 365 and s365 to s370 described above are performed.

When the shape 89 desired by the user is formed, spraying of forming materials may be finished (s367). When the support s is combined, the user may remove the support s by applying heat to the support s using various heaters or by dissolving the support s in a solvent. As a result thereof, the user may obtain the shape 89.

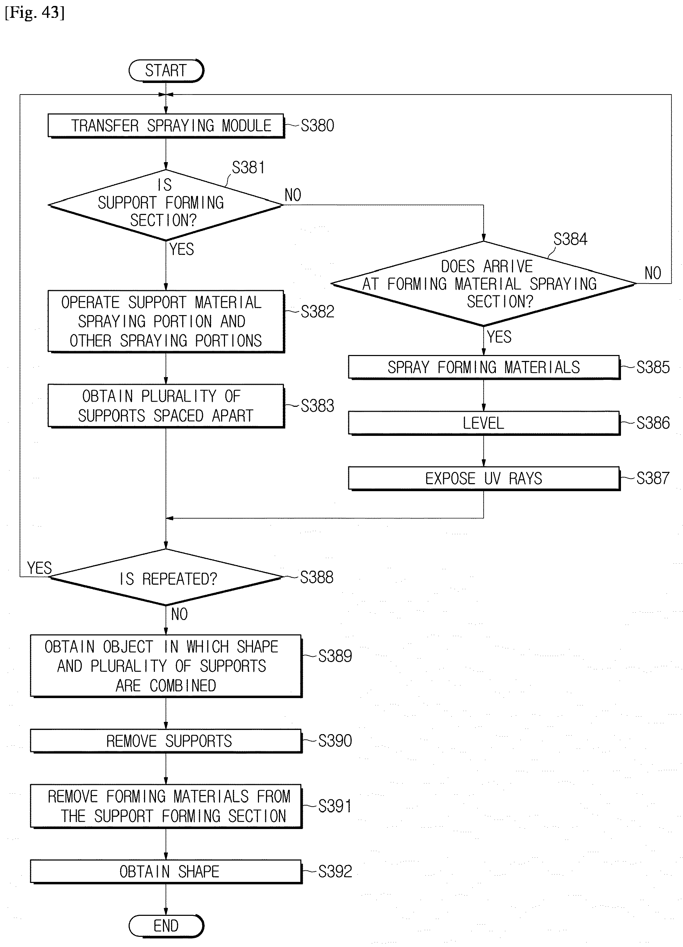

FIG. 43 is a flowchart illustrating a fourth embodiment of the method of controlling the shape forming apparatus.

As shown in FIG. 43, the forming material spraying module 100 may move to a place for forming a shape according to a control signal generated based on shape data (s380).

When the forming material spraying module 100 arrives at a support forming section (YES in s381), the support material spraying portion 150 and the other spraying portions 110 to 140 of the forming material spraying module 100 may spray a support material and forming materials, respectively. In this case, as shown in FIGS. 33, the spraying portions 110 to 140 and the support material spraying portion 150 may spray the forming materials and the support material to form the plurality of supports s10 to s15 not to be in contact with and be separated from one another by stacked forming materials a50 to a55. According to embodiments, the spraying portions 110 to 140 and the support material spraying portion 150 may intersect with one another and spray the forming materials and the support material to the support forming section to form a plurality of supports partitioned by the stacked forming materials. According to another embodiment, the first spraying portion 110 to the fourth spraying portion 140 spray the forming materials to be spaced apart from one another and the support material spraying portion 150 may spray the support material to a space between the forming materials. According to still another embodiment, after the support material spraying portion 150 sprays the support material, two or more of the plurality of spraying portions 110 to 140 may continuously spray the forming materials and sequentially the support material spraying portion 150 may spray again the support material. As a result thereof, as shown in FIG. 34, a plurality of supports spaced apart from one another may be obtained (s383). In this case, the leveling roller 101 may compress and level the sprayed forming materials and support material together.

When the forming material spraying module 100 does not arrive at a support forming section (NO in s381) and arrives at a forming material spraying section (s384), the forming material spraying module 100 may spray the forming materials according to shape data (s385), the leveling roller 101 may compress and level the forming materials (s386), and the exposure portion 160 may expose fixed and stacked forming materials to UV rays by emitting the UV rays theretoward to cure the forming materials (s387).

The operations s380 to s387 described above may be repeatedly performed until a shape desired by the user is formed (s388).

As a result thereof, an object in which the shape and the plurality of supports are combined may be obtained (s389). In this case, the user may remove a plurality of supports s by applying heat to the plurality of supports s using various heaters or by dissolving the plurality of supports s in a solvent (s390). Then, in the support forming section, the plurality of supports s may be removed and only the stacked forming materials may remain. The forming materials that remain may be removed using a proper cutter and the like or may be manually removed (s391). As a result thereof, the user may obtain the shape 89 (s392).

### [Industrial Applicability]

The present invention disclosed herein relates to a shape forming apparatus and a method of controlling the shape forming apparatus. Since the shape forming apparatus may be used in various fields such as manufacturing products, the shape forming apparatus and the method of controlling the shape forming apparatus have industrial applicability.

## Claims

1. A shape forming apparatus comprising:
a plurality of spraying portions configured to equivalently spray forming materials in different colors; and
a shape forming portion at which a shape is formed by the forming materials in different colors that are equivalently sprayed.

2. The shape forming apparatus of claim 1, wherein the plurality of spraying portions spray the forming materials in different colors through a plurality of circulations and equivalently spray the forming materials in different colors for each circulation.

3. The shape forming apparatus of claim 1, wherein the plurality of spraying portions spray the forming materials in different colors according to a predefined spraying pattern.

4. The shape forming apparatus of claim 3, wherein the plurality of spraying portions spray the forming materials in different colors according to a first pattern during at least one first circulation among a plurality of circulations and spray the forming materials in different colors according to a second pattern different from the first pattern during another second circulation.

5. The shape forming apparatus of claim 1, wherein the plurality of spraying portions sequentially spray the forming materials in different colors according to an arrangement order of the plurality of spraying portions.

6. The shape forming apparatus of claim 1, further comprising a support material spraying portion configured to form a support separable and detachable from a shape by spraying a support material to a support forming position.

7. The shape forming apparatus of claim 6, wherein the support is removable using heat or a solution.

8. The shape forming apparatus of claim 6, wherein the plurality of spraying portions and the support material spraying portion are controlled to spray the forming materials and the support material to form a shape corresponding to obtained shape data.

9. The shape forming apparatus of claim 6, wherein the support material spraying portion sprays a support material having a droplet larger than droplets of the forming materials sprayed by the plurality of spraying portions.

10. The shape forming apparatus of claim 6, wherein at least one of the plurality of spraying portions and the support material spraying portion spray the forming materials and the support material to a support forming section to form the support.

11. The shape forming apparatus of claim 10, wherein at least one of the plurality of spraying portions sprays the forming materials to at least one place of the support forming section and the support material spraying portion sprays the support material to another place different from the at least one place to which the forming materials are sprayed to form the support.

12. The shape forming apparatus of claim 1, wherein the forming materials in different colors comprise pigments in different colors.

13. The shape forming apparatus of claim 12, wherein the pigments in different colors comprise cyan, magenta, yellow, and black.

14. The shape forming apparatus of claim 12, wherein the pigments in different colors comprise cyan, magenta, yellow, and white.

15. The shape forming apparatus of claim 14, wherein the plurality of spraying portions comprise a white spraying portion configured to spray white, at least one of the plurality of spraying portions sprays at least one of cyan, magenta, yellow, and white to a first row of the shape, and the white spraying portion sprays white to a second row in contact with the first row.

16. The shape forming apparatus of claim 15, wherein the first row comprises a surface of the shape.

17. The shape forming apparatus of claim 14, wherein when white is sprayed to a first row of a shape, at least one of the plurality of spraying portions sprays at least one of cyan, magenta, and yellow to one place of a second row corresponding to one place of the first row to which the white is sprayed.

18. The shape forming apparatus of claim 1, wherein the shape forming portion comprises a base portion on which the sprayed forming materials in different colors are stacked.

19. The shape forming apparatus of claim 18, wherein the base portion is movable in a direction in which the plurality of spraying portions are arranged or a direction opposite to the direction in which the spraying portions are arranged.

20. The shape forming apparatus of claim 18, further comprising an exposure portion configured to emit ultraviolet (UV) rays toward the forming materials stacked on the base portion to cure the stacked forming materials.

21. The shape forming apparatus of claim 18, further comprising a roller configured to level the stacked forming materials.

22. The shape forming apparatus of claim 1, wherein at least one of the plurality of spraying portions sprays the forming materials using a piezoelectric inkjet method of spraying the forming materials according to deformation of a piezoelectric body.

23. The shape forming apparatus of claim 1, wherein at least one of the plurality of spraying portions sprays the forming materials using a thermal inkjet method of spraying the forming materials according to instantaneous heating of a heater.

24. The shape forming apparatus of claim 1, wherein at least one of the plurality of spraying portions is movable in a direction that intersects with a direction of spraying the forming materials or a direction parallel to the forming materials.

25. A method of controlling a shape forming apparatus comprising a plurality of spraying portions configured to spray forming materials in different colors, the method comprising:
generating a control signal related to spraying of the forming materials corresponding to shape data; and
spraying equivalent amounts of the forming materials in different colors according to the control signal.

26. The method of claim 25, wherein the spraying comprises spraying the forming materials in different colors through a plurality of circulations while equivalently spraying the forming materials in different colors for each circulation.

27. The method of claim 25, wherein the spraying comprises spraying the forming materials in different colors according to a predefined spraying pattern.

28. The method of claim 27, wherein the spraying comprises spraying the forming materials in different colors according to a first pattern during at least one first circulation among the plurality of circulations and spraying the forming materials in different colors according to a second pattern different from the first pattern during another second circulation.

29. The method of claim 25, further comprising forming, by a support material spraying portion, a support separable and detachable from a shape by spraying a support material to a support forming position.

30. The method of claim 29, wherein the forming of the support comprises spraying a support material having a droplet larger than droplets of the forming materials sprayed by the plurality of spraying portions.

31. The method of claim 29, wherein the forming of the support comprises forming, by at least one of the plurality of spraying portions and the support material spraying portion, the support by spraying the forming materials and the support material to a support forming section.

32. The method of claim 29, wherein the forming of the support comprises forming the support by spraying, by at least one of the plurality of spraying portions, the forming materials to at least one place of the support forming section and spraying, by the support material spraying portion, the support material to another place different from the at least one place to which the forming materials are sprayed.

33. The method of claim 29, further comprising removing the support.

34. The method of claim 25, wherein the forming materials in different colors comprise pigments in different colors while the pigments in different colors comprise cyan, magenta, and yellow and further comprise at least one of black and white.

35. The method of claim 25, wherein the spraying comprises spraying at least one of cyan, magenta, yellow, and white to a first row of a shape and spraying, by a white spraying portion, to a second row in contact with the first row.

36. The method of claim 35, wherein the first row comprises a surface of the shape.

37. The method of claim 25, wherein when white is sprayed to a first row of a shape, the spraying comprises spraying at least one of cyan, magenta, and yellow to one place of a second row corresponding to one place of the first row to which the white is sprayed.

38. The method of claim 25, further comprising:
leveling stacked forming materials; and
curing the stacked forming materials by emitting UV rays toward the stacked forming materials.

39. The method of claim 25, further comprising transferring the plurality of spraying portions.

40. The method of claim 25, wherein at least one of the plurality of spraying portions sprays the forming materials using a piezoelectric inkjet method of spraying the forming materials according to deformation of a piezoelectric body.

41. The method of claim 25, wherein at least one of the plurality of spraying portions sprays the forming materials using a thermal inkjet method of spraying the forming materials according to instantaneous heating of a heater.
